# EUROPEAN PATENT APPLICATION

(11) **EP 4 644 158 A1**
(43) Date of publication of application: **05.11.2025**
(21) Application number: 23912108.0
(22) Date of filing: 26.12.2023
(51) Int. Cl.: B60K 15/063, B60K 8/00, B60L 50/71, B60L 50/75

(54) **WORK VEHICLE**

(30) Priority: 28.12.2022 JP 2022212151
(71) Applicant: KUBOTA CORPORATION, Osaka-shi, Osaka 556-8601 (JP)
(72) Inventor: TAKAKI, Go, Sakai-shi, Osaka 590-0908 (JP); TAKAKI, Takahiro, Sakai-shi, Osaka 590-0908 (JP); SAKANO, Tomoyoshi, Sakai-shi, Osaka 590-0908 (JP)
(74) Representative: Cabinet Beau de Loménie
(86) International application number: PCT/JP2023/046560
(87) International publication number: WO 2024/143329

(57) **Abstract**

It is possible to optimally arrange tank(s) in a travel vehicle body that travels autonomously or based on an external command.

A working vehicle (1) of the present invention includes a travel vehicle body (2) to travel in response to an external command and to attach a working device (49) thereto, a drive device (5) provided in or on the travel vehicle body (2) to generate a driving force for the travel vehicle body (2), at least one tank (7) to store a gas which is an energy source of the driving force, a controller (70) to control travel of the travel vehicle body (2) autonomously or based on an external command. The at least one tank is provided at least partially at a front portion or a rear portion of the travel vehicle body (2).

## Description

### Technical Field

The present invention relates to working vehicles each of which travels, autonomously or based on an external command, with a driving force generated using a gas housed in a tank.

### Background Art

As described in PTL 1, a tractor includes a hood at a front portion of a vehicle body. An engine, a radiator, a fuel tank, a battery, and the like are housed inside the hood.

Meanwhile, to achieve decarbonization, development of fuel cell vehicles (FCV) using hydrogen as a fuel has been progressing. The working vehicle is provided with a tank (hydrogen tank) that houses (stores) a hydrogen gas.

### Citation List

### Patent Literature

PTL 1: Japanese Unexamined Patent Application Publication No. 2022-128483

### Summary of Invention

### Technical Problem

It has been highly desired for working vehicles that need a tank to establish technology for arranging the tank optimally.

The present invention was made in consideration of the aforementioned problem, and an object of the present invention is to provide working vehicles in each of which a tank is optimally arranged with respect to a travel vehicle body that travels autonomously or based on an external command.

### Solution to Problem

Technical solutions provided by the present invention to solve the aforementioned problem are characterized in the following features.

A working vehicle according to an example embodiment of the present invention includes a travel vehicle body to travel in response to an external command and to attach a working device thereto, a drive device provided in or on the travel vehicle body to generate a driving force for the travel vehicle body, at least one tank to store a gas which is an energy source of the driving force, and a controller to control travel of the travel vehicle body autonomously or based on an external command, wherein the at least one tank is at least partially located at a front portion or a rear portion of the travel vehicle body.

The drive device may include a fuel cell to generate electric power using a gas in the at least one tank, a battery to store electric power generated by the fuel cell, and a drive motor to be driven by electric power generated by the fuel cell.

One or more of the tanks may be provided at the front portion of the travel vehicle body. The fuel cell may be provided at the rear portion of the travel vehicle body.

A plurality of the tanks provided may be arranged in a front-rear direction (when at least one of the tanks is provided at the front portion of the travel vehicle body and the fuel cell is provided at the rear portion of the travel vehicle body).

Each of the plurality of tanks may have a tubular shape extending in a vehicle-body width direction. Each of the plurality of tanks may be in the form of a single tube in which a dimension of each of the plurality of tanks in a vehicle-body width direction corresponds to a dimension of the travel vehicle body in the vehicle-body width direction.

The at least one tank may have a tubular shape extending in a front-rear direction.

A dimension of the at least one tank in a front-rear direction may correspond to a distance from a front portion to the rear portion of the travel vehicle body.

The plurality of tanks may be arranged in a front-rear direction.

Each of the plurality of tanks may have a tubular shape extending in an up-down direction.

One or more of the tanks may be provided at the rear portion of the travel vehicle body. The fuel cell may be provided at the front portion of the travel vehicle body.

A plurality of the tanks may be arranged in a front-rear direction (when at least one of the tanks is provided at the rear portion of the travel vehicle body and the fuel cell is provided at the front portion of the travel vehicle body).

The plurality of tanks may be arranged in a vehicle-body width direction.

Each of the plurality of tanks may have a tubular shape extending in an up-down direction.

### Advantageous Effects of Invention

It is possible to arrange a tank optimally in the travel vehicle body, which travels autonomously or based on an external command, according to the present invention.

### Brief Description of Drawings

[FIG. 1] FIG. 1 is a side view of a working vehicle of a present embodiment using a first arrangement example.
[FIG. 2] FIG. 2 is a plan view of a working vehicle of the present embodiment using the first arrangement example.
[FIG. 3] FIG. 3 is a block diagram of a drive device provided in a working vehicle.
[FIG. 4] FIG. 4 is a side view of a working vehicle using a second arrangement example.
[FIG. 5] FIG. 5 is a plan view of a working vehicle using the second arrangement example.
[FIG. 6] FIG. 6 is a side view of a working vehicle using a third arrangement example.
[FIG. 7] FIG. 7 is a plan view of a working vehicle using the third arrangement example.
[FIG. 8] FIG. 8 is a side view of a working vehicle using a fourth arrangement example.
[FIG. 9] FIG. 9 is a plan view of a working vehicle using the fourth arrangement example.
[FIG. 10] FIG. 10 is a side view of a working vehicle using a fifth arrangement example.
[FIG. 11] FIG. 11 is a plan view of a working vehicle using the fifth arrangement example.
[FIG. 12] FIG. 12 is a side view of a working vehicle using a sixth arrangement example.
[FIG. 13] FIG. 13 is a plan view of a working vehicle using the sixth arrangement example.
[FIG. 14] FIG. 14 is a side view of a working vehicle using a seventh arrangement example.
[FIG. 15] FIG. 15 is a plan view of a working vehicle using the seventh arrangement example.
[FIG. 16] FIG. 16 is a side view of a working vehicle using an eighth arrangement example.
[FIG. 17] FIG. 17 is a plan view of a working vehicle using the eighth arrangement example.
[FIG. 18] FIG. 18 is a side view of a working vehicle using a ninth arrangement example.
[FIG. 19] FIG. 19 is a plan view of a working vehicle using the ninth arrangement example.
[FIG. 20] FIG. 20 is a side view of a working vehicle using a tenth arrangement example.
[FIG. 21] FIG. 21 is a plan view of a working vehicle using the tenth arrangement example.
[FIG. 22] FIG. 22 is a perspective view illustrating a first support member.
[FIG. 23] FIG. 23 is a perspective view illustrating a second support member.
[FIG. 24] FIG. 24 is a perspective view illustrating a third support member.
[FIG. 25] FIG. 25 is a perspective view illustrating a fourth support member.
[FIG. 26] FIG. 26 is a control block diagram.

### Description of Embodiments

Hereinafter, example embodiments of a working vehicle 1 according to the present invention will be described.

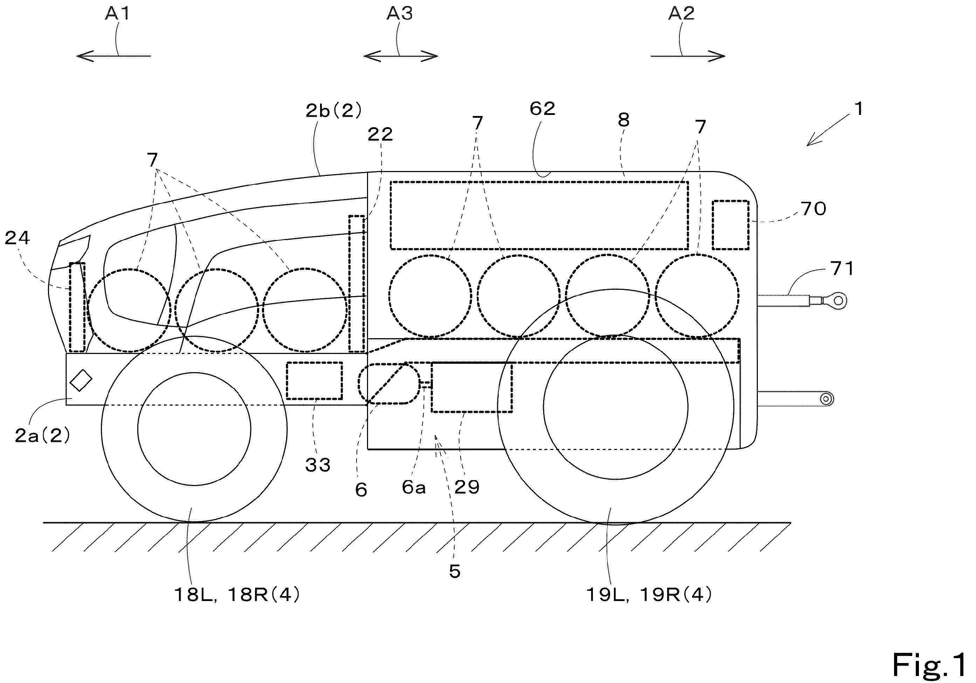

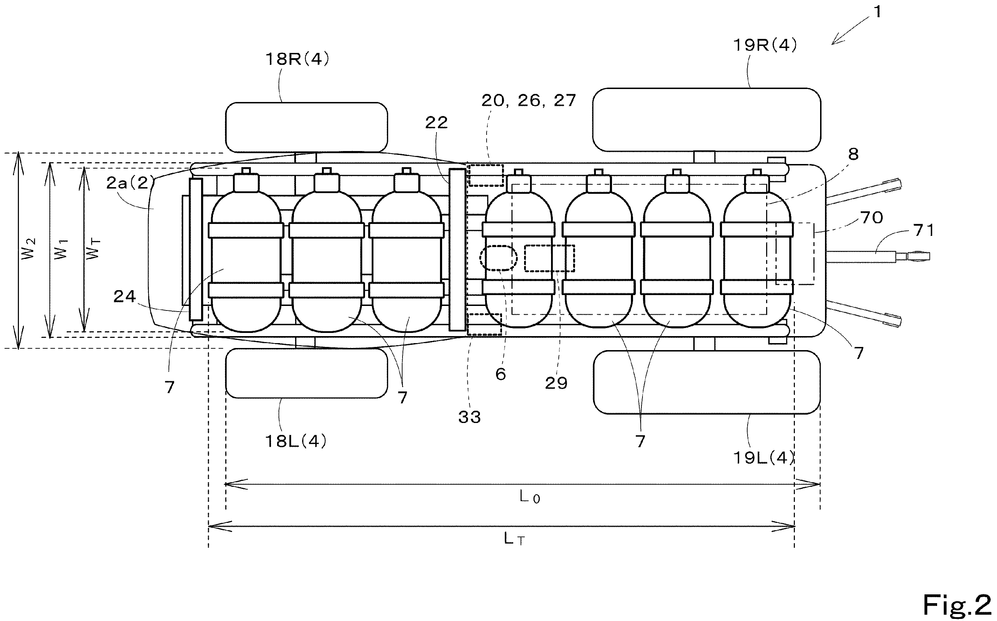

FIG. 1 is a side view of the working vehicle 1 of the present embodiment. FIG. 2 is a plan view of the working vehicle 1 of the present embodiment.

The working vehicle 1 is a vehicle that travels autonomously or based on an external command in an unmanned manner and is a construction machine, an agricultural vehicle, a utility vehicle, or the like.

As illustrated in FIG. 1 to FIG. 3, the working vehicle 1 of the present embodiment includes a travel vehicle body 2, a drive device 5, at least one tank 7, and a controller 70. The travel vehicle body 2 is capable of traveling in response to an external command. The travel vehicle body 2 is capable of allowing a working device 49 to be linked (mounted) to the travel vehicle body 2. The travel vehicle body 2 is provided with the drive device 5. The drive device 5 generates a driving force for the travel vehicle body 2 by using a drive motor 6 and the like. The tank 7 houses a gas that is an energy source of the driving force. The controller 70 controls travel of the travel vehicle body 2. The controller 70 controls at least one traveling device 4 and the drive device 5 in accordance with a preset program or an external command to enable the travel vehicle body 2 to travel.

The tank 7 provided in the working vehicle 1 of the present invention houses a gas that is an energy source of the driving force. An example of such a gas is a hydrogen gas, which is used as a fuel in a polymer electrolyte fuel cell (PEFC). Note that, a gas other than hydrogen, such as a LNG, a LPG, a biomass gas, or the like, may be used as a fuel in the polymer electrolyte fuel cell (PEFC). That is, not limited to the hydrogen gas, a methane gas, a gas containing methane as a main component, or the like may be used as the gas housed in the tank 7.

Further, the energy source of the driving force is not limited to the electric power (electric energy) obtained in the fuel cell. A vehicle in which a gas that is stored in the tank 7 is used as a fuel to drive an internal combustion-type engine (a diesel engine or the like) is also included in the working vehicle 1 of the present invention. Examples of such a gas are hydrogen, methane, a natural gas containing methane as a main component, a petroleum gas, a biomass gas, and the like.

In the present embodiment, a tractor capable of travelling in an unmanned manner is presented as an example of the working vehicle 1. The working vehicle 1 according to the present invention is, however, not limited to the tractor. The working vehicle 1 according to the present invention may be, for example, an agricultural machine (a combine, a rice transplanter, or the like) other than tractors, a construction machine, a utility vehicle, or the like.

In the following description, the direction (the forward traveling direction of the working vehicle 1) indicated by the direction of the arrow A1 in FIG. 1 is considered as forward. The direction (the reverse traveling direction of the working vehicle 1) indicated by the arrow A2 is considered as rearward. The direction indicated by the arrow A3 is considered as the front-rear direction. The directions indicated by the arrow A1 to the arrow A3 are illustrated, as appropriate, in the drawings.

Additionally, the horizontal direction (left-right direction) that is a direction orthogonal to the arrow A3 along the front-rear direction is considered as the vehicle-body width direction K1 or the width direction (see FIG. 2). The vehicle-body width direction K1 is the width direction of the working vehicle 1. The direction from a central portion of the working vehicle 1 in the width direction toward the right or from the central portion toward the left is considered as outward (width-direction outward) in the vehicle-body width direction K1. The width-direction outward is a direction separating, in the vehicle-body width direction K1, from the center of the working vehicle 1 in the width direction. A direction opposite to the width-direction outward is considered as inward (width-direction inward) in the vehicle-body width direction K1. The width-direction inward is a direction approaching, in the vehicle-body width direction K1, the center of the working vehicle 1 in the width direction.

Hereinafter, the travel vehicle body 2, the drive device 5, the tank 7, and the controller 70, which are provided in the working vehicle 1, will be described first.

The travel vehicle body 2 is a vehicle that travels autonomously or in response to an external command. As illustrated in FIG. 1 and FIG. 2, the travel vehicle body 2 includes a long frame member 2a that is elongated in the front-rear direction and that is provided at a lower portion of the working vehicle 1, and a cover 2b that covers an upper portion of the frame member 2a. The frame member 2a and the cover 2b are provided to extend over the entire length from the front end to the rear end of the working vehicle 1 in the front-rear direction. The frame member 2a includes metallic frame members and the like that are combined together to exert high rigidity. Additionally, a hollow is present between the frame member 2a and the cover 2b, and the hollow serves as a housing portion 62 that houses the tank 7, the drive device 5, the controller 70, and the like. The travel vehicle body 2 includes the traveling device 4 at each of two ends thereof in the vehicle-body width direction and includes the drive device 5 and the controller 70 at an upper portion of the travel vehicle body 2.

As illustrated in FIG. 1, the travel vehicle body 2 in the present embodiment includes the drive motor 6 and a transmission case 29 at a central lower portion of the frame member 2a in the front-rear direction. The driving force generated by the drive motor 6 is transmitted to the transmission case 29.

When a portion forward of the drive motor 6 and a portion rearward of the drive motor 6 in the travel vehicle body 2 are considered as "front portion" and "rear portion", respectively, the arrangement state of the tank 7 and the like is different between the front portion and the rear portion in the travel vehicle body 2 in the present embodiment.

Specifically, four tanks 7 filled with hydrogen are housed at the rear portion of the travel vehicle body 2 in the present embodiment. A fuel cell stack (fuel cell) 8 is provided above the four tanks 7. Three tanks 7 are housed at the front portion of the travel vehicle body 2 in the present embodiment. A first radiator 22 and a second radiator 24 are provided forward and rearward of the three tanks 7. Note that, in the present embodiment, the radiator provided forward is the second radiator 24, and the radiator provided rearward is the first radiator 22.

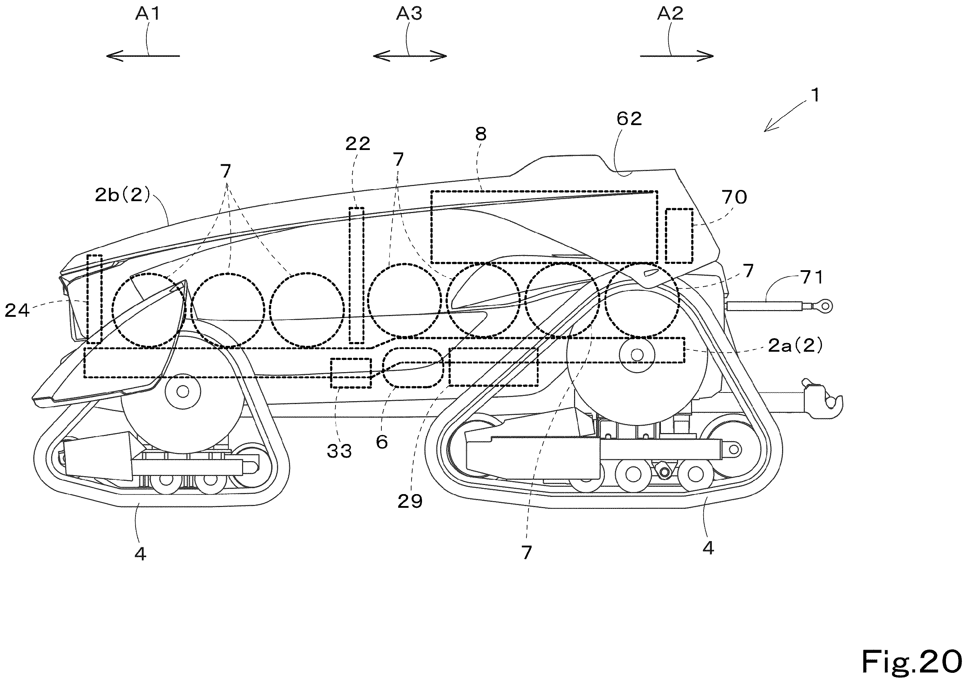

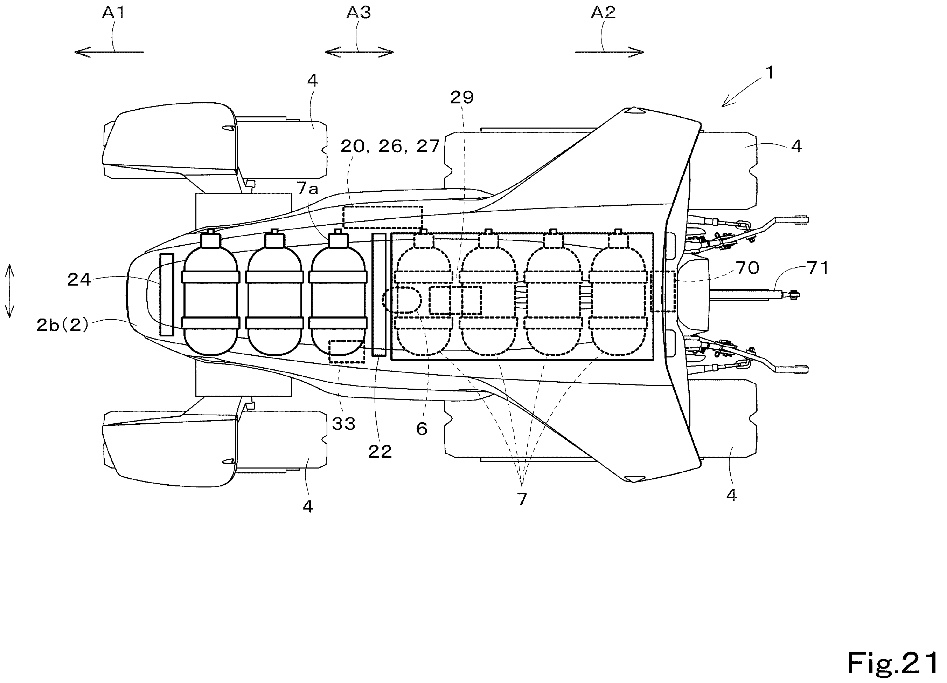

The traveling devices 4 support and cause the travel vehicle body 2 to travel with respect to a road surface (the ground). In other words, the traveling devices 4 apply a propelling force to the travel vehicle body 2. In the present embodiment, the traveling devices 4 are front wheels 18L and 18R and rear wheels 19L and 19R. Each of the rear wheels 19L and 19R is provided as a rubber tire having a larger diameter than each of the front wheels 18L and 18R and supports a large load applied to the rear portion of the travel vehicle body 2. In the traveling devices 4 in the present embodiment, the power is transmitted from the drive device 5 to the front wheels 18L and 18R or the rear wheels 19L and 19R or to the front wheels 18L and 18R and the rear wheels 19L and 19R. Note that, as illustrated in FIG. 20 and FIG. 21, crawlers or the like may be used instead of rubber tires in the traveling devices 4 in the present invention.

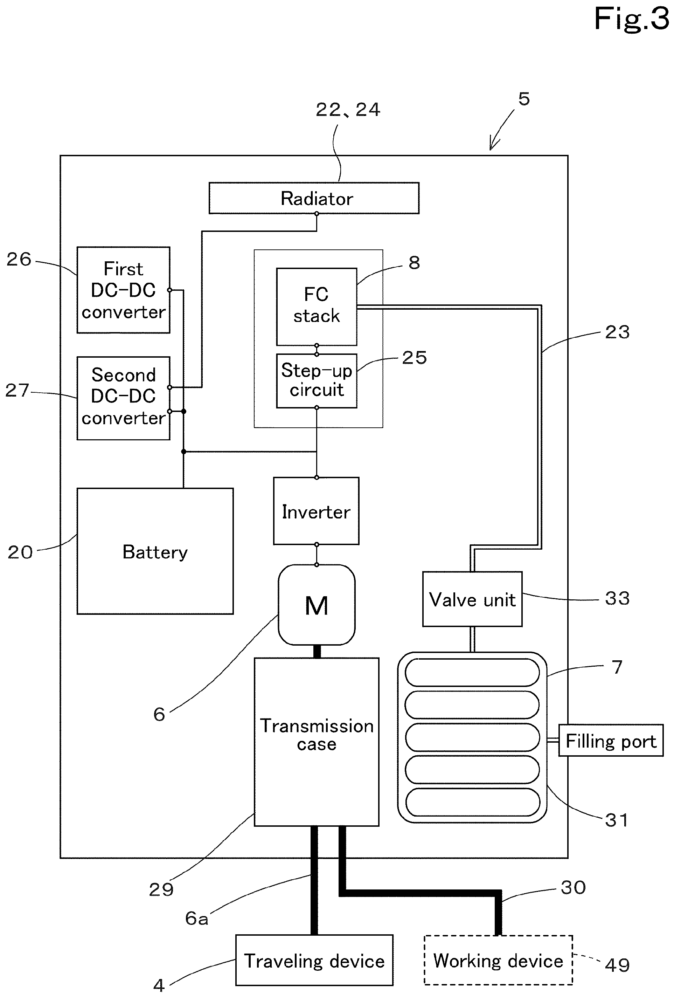

FIG. 3 is a block diagram of the drive device 5 provided in the working vehicle 1 of the present embodiment. Note that the drive device 5 provided in the working vehicle 1 of the present invention is not limited to the example illustrated in FIG. 1 and FIG. 2. The installed number of each of the drive motor 6 and the like incorporated in the drive device 5 can be changed, as appropriate.

As illustrated in FIG. 3, the drive device 5 generates a driving force with which the traveling devices 4 travels (are driven) or the working device 49 is driven. In the present embodiment, the electric power generated in the fuel cell (fuel cell stack 8) is used in the drive device 5. However, the power source of the driving force of the drive device 5 in the present invention may be an internal combustion engine or the like.

Specifically, the drive device 5 in the present embodiment includes the drive motor 6, the fuel cell stack 8, and a battery 20. The drive motor 6 generates power with which the traveling devices 4 are driven. The fuel cell stack 8 supplies electric power to the drive motor 6. The battery 20 stores electric power supplied from the fuel cell stack 8.

The fuel cell stack 8 used in the drive device 5 in the present embodiment generates electricity by an electrode reaction between hydrogen, which is a fuel, and oxygen. The hydrogen that is to be supplied as a fuel to the fuel cell is occluded or stored in the tanks 7. The drive device 5 is provided with the fuel cell stack 8 in which multiple layers of electrodes are stacked. The hydrogen gas in the tanks 7 is supplied to the fuel cell stack 8, and an electrode reaction occurs inside the fuel cell stack 8. That is, the drive device 5 in the present embodiment has a structure in which electricity (electric power) generated by an electrode reaction inside the fuel cell stack 8 is used to drive the drive motor 6. Carbon dioxide, which is necessarily discharged during a combustion reaction or the like in an internal combustion engine, is not discharged during an electrode reaction in the fuel cell stack 8. Therefore, the working vehicle 1 of the present embodiment driven by the electric power generated in the fuel cell (fuel cell stack 8) has a potential to achieve decarbonization.

As illustrated in FIG. 1 and FIG. 2, the fuel cell stack 8 includes, inside a box-shaped battery casing, a plurality of stacked single cells each including two types of electrodes, which are a positive electrode and a negative electrode.

Specifically, the positive electrode and the negative electrode are made of a positive electrode material and a negative electrode material, respectively, and each have a sheet shape or a film shape. Each of the single cells includes one positive electrode and one negative electrode. The single cells adjacent to each other are partitioned from each other by a separator. A hydrogen gas in the tanks 7 is supplied to the positive electrode, and an oxygen gas (oxidizing gas) compressed by a compressor or the like is supplied to the negative electrode. A battery reaction (power generation) occurs in each of the single cells. The fuel cell stack 8 generates electric power having a voltage and electric current required for driving the drive device 5 by collecting the electric power generated in each of the single cells.

As illustrated in FIG. 3, a coolant for adjusting the temperatures of the electrodes is supplied to the fuel cell stack 8. The coolant adjusts the temperature of the electrodes, which are provided inside the fuel cell stack 8, to a temperature (a temperature of about 70°C for a hydrogen fuel cell) with which efficiency in power generation is increased. The coolant circulates between the inside of the fuel cell stack 8 and the radiator (the first radiator 22) provided near the center of the travel vehicle body 2 in the front-rear direction. The flow rate of the coolant is adjusted using a pump, a valve, and the like, which are not illustrated, to adjust the temperature inside the fuel cell stack 8.

As illustrated in FIG. 1 to FIG. 3, the fuel cell stack 8 is housed in a rear upper portion of the housing portion 62 of the travel vehicle body 2 in the present embodiment. The hydrogen gas is supplied to the fuel cell stack 8 from the tanks 7 through a gas pipe 23 (see FIG. 3).

Note that the second radiator 24 is provided at the front portion of the travel vehicle body 2 in the working vehicle 1 of the present embodiment. The second radiator 24 is provided separately from the first radiator 22 provided rearward. In the present embodiment, the first radiator 22 is used for cooling the above-described fuel cell stack 8, and the second radiator 24 is used for cooling members other than the fuel cell stack 8.

As illustrated in FIG. 3, a step-up converter 25 is provided downstream (downstream in a power transmission path) of the drive motor 6. The step-up converter 25 boosts the electric power generated in the fuel cell stack 8. A voltage for activating the drive motor 6 is ensured by the step-up converter 25 boosting the electric power generated in the fuel cell stack 8.

The step-up converter 25 includes a circuit that boosts the electric power generated in the fuel cell stack 8. The electric power boosted by the step-up converter 25 is sent to the drive motor 6, and the drive motor 6 is driven. Note that electrical components used in the working vehicle 1 include components that are actuated with a lower voltage than the drive motor 6. With respect to electrical components (low-voltage electrical components) that are actuated with such a lower voltage, electric power that has been stepped down in a step-down converter including a first DC-DC converter 26 and a second DC-DC converter 27 is supplied. In the present embodiment, electrical components that are actuated with a low voltage include the above-described radiators (the first radiator 22 and/or the second radiator 24) and the battery 20.

The battery 20 stores the electricity generated in the fuel cell stack 8. With respect to the battery 20 and an air-conditioner 28, the electric power that has been stepped down by the first DC-DC converter 26 is supplied. With respect to the radiators 22 and 24, the electric power that has been stepped down by the second DC-DC converter 27 is supplied.

Note that, in the working vehicle 1 of the present embodiment, the battery 20 is provided between the right front wheel 18R and the right rear wheel 19R. In other words, the battery 20 is provided at the right end of a central portion of the travel vehicle body 2 in the front-rear direction. The battery 20 is housed together with the first DC-DC converter 26 and the second DC-DC converter 27 inside the cover 2b (inside the housing portion 62).

The drive motor 6 is, for example, a permanent magnet-embedded DC or AC synchronous motor, a wound field synchronous motor, or the like. One drive motor 6 is provided at the center in the vehicle-body width direction and slightly rearward of the central portion of the travel vehicle body 2 in the front-rear direction. The drive motor 6 includes an output shaft 6a extending rearward and rotationally drives the output shaft 6a. The rear end of the output shaft 6a is connected to the transmission case 29 to transmit the driving force to the inside of the transmission case 29.

The transmission case 29 includes a transmission by which the power transmitted to the output shaft 6a is speed-changed, a clutch, a differential gear, and the like. Power is input to the transmission case 29 from the output shaft 6a. The input power is speed-decreased or speed-increased in the transmission case 29. The transmission case 29 outputs the speed-decreased or speed-increased power to the front wheels 18 and/or the rear wheels 19 of the traveling devices 4. For example, the power output to the traveling devices 4 is transmitted to only the rear wheels 19 when the working vehicle 1 is a rear-wheel-drive vehicle. When the working vehicle 1 is a four-wheel-drive vehicle, the power output to the traveling devices 4 is transmitted to both the front wheels 18 and the rear wheels 19.

Note that only one drive motor 6 is provided at an upper portion of the travel vehicle body 2 in the present embodiment. The power generated by the one drive motor 6 is distributed to a plurality of destination toward the front wheels 18L and 18R and/or the rear wheels 19L and 19R.

The power that has been speed-decreased or speed-increased in the transmission case 29 is transmitted not only to the traveling devices 4 but also to the working device 49. The working device 49 is linked to a rear portion (the rear end of the transmission case 29) of the working vehicle 1 of the present embodiment. A linkage (three-point linkage 71) is used for linkage of the working device 49. With the three-point linkage 71 provided, it is possible to attach various implements (working device 49) to the rear of the working vehicle 1. The three-point linkage 71 enables orientation change and drive of the working device 49 and enables the working vehicle 1 to perform various types of work. As the working device 49, an implement such as a cultivator, a rotary, a mulcher, a hammer knife mower, a ridge plastering machine, a carrier, a seeder, a harrow, a ridger, or the like is used.

A PTO shaft (power takeoff shaft) may be provided at a rear portion (the rear end of the transmission case 29) of the working vehicle 1. The power transmitted (input) to the transmission case 29 is output to the PTO shaft. With the PTO shaft provided, it is also possible to actuate the working device 49 (implement) by the electric power generated in the fuel cell.

Note that the PTO shaft and the three-point linkage 71 described above are not necessarily installed. The PTO shaft and the three-point linkage 71 may be not installed in the working vehicle 1 such as an agricultural machine similar to a combine or a rice transplanter, a construction machine, or the like. Additionally, separately from the drive motor 6 described above, a hydraulic pump that is driven by the power output by the drive motor 6, an electric motor that is different from the drive motor 6, or the like may be provided to actuate the working device 49 (implement) hydraulically or electrically.

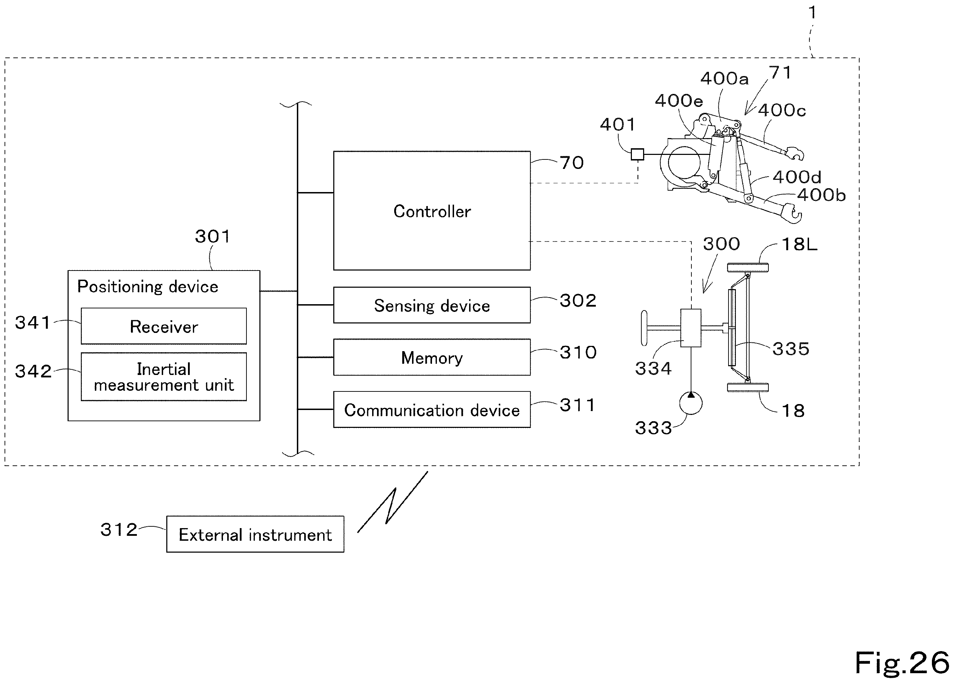

As illustrated in FIG. 26, the linkage (three-point linkage 71) includes a lift arm 400a, a lower link 400b, a top link 400c, a lift rod 400d, and a lift cylinder 400e. A front end portion of the lift arm 400a is supported at a rear upper portion of the transmission case to be swingable upward or downward. The lift arm 400a is swung (raised and lowered) by driving of the lift cylinder 400e. The lift cylinder 400e is provided as a hydraulic cylinder. The lift cylinder 400e is connected to a hydraulic pump via a control valve 401. The control valve 401 is a solenoid valve or the like and causes the lift cylinder 400e to extend and retract.

A front end portion of the lower link 400b is supported at a rear lower portion of the transmission case 29 to be swingable upward or downward. A front end portion of the top link 400c is supported, above the lower link 400b, at a rear portion of the transmission case 29 to be swingable upward or downward. The lift rod 400d links the lift arm 400a and the lower link 400b to each other. The working device 49 is linked to a rear portion of the lower link 400b and to a rear portion of the top link 400c. When the lift cylinder 400e is driven (extended and retracted), the lift arm 400a is raised and lowered and the lower link 400b linked to the lift arm 400a via the lift rod 400d is also raised and lowered. Consequently, the working device 49 is swung (raised and lowered) upward or downward with a fulcrum at a front portion of the lower link 400b.

As illustrated in FIG. 26, the working vehicle 1 includes the controller 70, a steering device 300, a positioning device 301, and a sensing device 302. The controller 70 is a device including an electrical/electronic circuit, a program stored in a CPU or the like, and the like and controls various instruments included in the working vehicle 1. For example, the controller 70 controls steering of the steering device 300, the rotational speed of the drive motor 6, and the vehicle speed of the traveling devices 4.

The steering device 300 is a device that steers the front wheels 18L and 18R in response to steering control by the controller 70. The steering device 300 includes a hydraulic pump 333, a control valve 334 to which the hydraulic fluid delivered from the hydraulic pump 333 is supplied, and a steering cylinder 335 that is actuated by the control valve 334. The control valve 334 is a solenoid valve that is actuated based on a control signal. The control valve 334 is, for example, a three-position switching valve that is switchable by the movement of a spool and/or the like. The steering cylinder 335 is connected to an arm (knuckle arm), which changes the orientations of the front wheels 18L and 18R, and is actuated in response to switching of the three-position switching valve of the control valve 334 to steer the front wheels 18L and 18R.

The positioning device 301 is capable of detecting the position (measured position information including latitude and longitude) thereof through a satellite positioning system (positioning satellite), such as D-GPS, GPS, GLONASS, Beidou, Galileo, Michibiki, or the like. That is, the positioning device 301 receives a satellite signal (the position of a positioning satellite, transmission time, correction information, and the like) transmitted from the positioning satellite and, based on the satellite signal, detects the position (for example, latitude and longitude) of the working vehicle 1, in other words, the position of the vehicle body. The positioning device 301 includes a receiver 341 and an inertial measurement unit (IMU) 342. The receiver 341 is a device that has an antenna and/or the like and that receives a satellite signal transmitted from a positioning satellite, and the receiver 341 is mounted on the travel vehicle body 2 separately from the inertial measurement unit 342. The inertial measurement unit 342 includes an acceleration sensor that detects acceleration, a gyroscope sensor that detects angular velocity, and/or the like.

The sensing device 302 is a sensor that detects a circumstance around the working vehicle 1, and the sensing device 302 is, for example, a CCD camera equipped with a CCD (charge coupled device) image sensor, a CMOS camera equipped with a CMOS (complementary metal oxide semiconductor) image sensor, an infrared camera, a laser sensor (LiDAR: light detection and ranging), or the like. The laser sensor (LiDAR) emits pulsed infrared light or the like millions of times per second and detects an object around the travel vehicle body 2 by measuring a period of time until the infrared light returns by being reflected.

The controller 70 controls driving such that the working vehicle 1 (travel vehicle body 2) is capable of traveling autonomously. For convenience of description, autonomous travel of the working vehicle 1 (travel vehicle body 2) is referred to as "automated driving". When automated driving is to be performed, the controller 70 creates a map (environmental map) indicating the environment around the working vehicle 1 (travel vehicle body 2) based on sensing information detected by the sensing device 302. When a destination of the working vehicle 1 (travel vehicle body 2) has been determined, the controller 70 grasps a current position by the positioning device 301 and causes automated travel toward the destination to be performed while referring to the environmental map. When the working vehicle 1 moves from a current position toward a destination, the controller 70 controls the steering device 300 to perform steering such that the working vehicle 1 (travel vehicle body 2) moves along an agricultural road (road), and also controls the vehicle speed of the working vehicle 1 (travel vehicle body 2).

When the working vehicle 1 (travel vehicle body 2) performs work in an agricultural field, a preset work route (work path) in the agricultural field is referred. The controller 70 controls the steering device 300 to perform steering such that the working vehicle 1 (travel vehicle body 2) moves along the work path, and also controls the vehicle speed of the working vehicle 1 (travel vehicle body 2). Note that, when the working vehicle 1 (travel vehicle body 2) moves along an agricultural road (road), the controller 70 also refers to a preset travel route (travel path) along the road (agricultural road). Then, the controller 70 controls the steering device 300 to perform steering such that the working vehicle 1 (travel vehicle body 2) moves along the travel path. The controller 70 may control the vehicle speed of the working vehicle 1 (travel vehicle body 2) by controlling the rotational speed of the drive motor 6. Additionally, each of the work path and the travel path may be stored in a memory 310, or, as illustrated in FIG. 26, a communication device 311 capable of communicating with an external instrument 312 such as a server, a portable terminal, or the like may be provided at the working vehicle 1 (travel vehicle body 2) to acquire the work path and the travel path from the external instrument 312 through the communication device 311.

The controller 70 is also capable of controlling the linkage (three-point linkage 71) when automated driving is performed. For example, when work is performed in an agricultural field, a control signal is output to the control valve 401 to actuate the linkage (three-point linkage 71). Consequently, the controller 70 causes the working device 49 to be raised and lowered automatically.

Note that, although autonomous travel of the working vehicle 1 (travel vehicle body 2) has been described in the above-described embodiment, the working vehicle 1 (travel vehicle body 2) may be a structure that travels based on an external command. For example, the working vehicle 1 (travel vehicle body 2) is capable of travelling in response to, as an external command, a command from a remote control device. In this case, the external instrument 312 is a remote control device. The remote control device (external instrument 312) transmits commands for steering directions, vehicle speed, the linkage (raising/lowering of the three-point linkage), and the like to the communication device 311. The controller 70 controls the steering device 300 in accordance with a steering direction, controls the drive motor 6 and the like in accordance with a vehicle speed, and controls the control valve 401 in accordance with raising/lowering of the linkage (three-point linkage).

Cylinders are used as the tanks 7. Each cylinder is made of a hard synthetic resin or the like reinforced with carbon fiber and/or glass fiber and has an elongated tubular shape. A neck 7a is provided at the front end of each of the tanks 7. The gas pipe 23 is linked to the neck 7a of each of the tanks 7 via a safety valve (solenoid valve), not illustrated. The gas pipe 23 is made of a composite material in which a synthetic resin capable of preventing permeation of the hydrogen gas is combined with a flexible metal wire or the like.

As illustrated in FIG. 1, the tanks 7 are housed in the housing portion 62.

As illustrated in FIG. 3, the hydrogen gas that has been sent from each of the tanks 7 through the gas pipe 23 is collected and mixed, as appropriate, in a valve unit 33. As illustrated in FIG. 2, the valve unit 33 in the present embodiment is provided, at an intermediate position in the front-rear direction of the travel vehicle body 2, between (at the left end) the left front wheel 18L and the left rear wheel 19L. The valve unit 33 includes a solenoid valve or the like capable of adjusting the pressure and the flow rate of the hydrogen gas. The valve unit 33 adjusts the hydrogen gas to a pressure and a flow rate suitable for power generation in the fuel cell stack 8. The hydrogen gas for which pressure and flow rate have been adjusted is sent to the fuel cell stack 8.

FIG. 1 to FIG. 2 and FIG. 4 to FIG. 21, illustrating the working vehicles 1 that differ from each other in the arrangement of the tanks 7 and the like, are a first arrangement example to a tenth arrangement example. Each of the first arrangement example to the tenth arrangement example illustrates the working vehicle 1 in which "at least a portion of at least one tank 7 is provided at one of the front portion and the rear portion of the travel vehicle body 2". In other words, in each of the working vehicles 1 in the first arrangement example to the tenth arrangement example, at least one tank 7 is housed at the front portion of the travel vehicle body 2, the rear portion of the travel vehicle body 2, or both of the front portion and the rear portion of the travel vehicle body 2. Note that the front portion of the travel vehicle body 2 is a portion forward of the position (a central portion in the front-rear direction) at the middle of the entire length of the travel vehicle body 2, and the rear portion of the travel vehicle body 2 is a portion rearward of the position (the central portion in the front-rear direction) at the middle of the entire length of the travel vehicle body 2. Alternatively, the front portion of the travel vehicle body 2 is a portion forward of the position at the middle of the length of a wheel base from the front wheels 18L and 18R to the rear wheels 19L and 19R, and the rear portion of the travel vehicle body 2 is a portion rearward of the position at the middle of the length of the wheel base.

Next, the first to tenth arrangement examples will be described individually.

### [First Arrangement Example]

As illustrated in FIG. 1 and FIG. 2, in the working vehicle 1 in the first arrangement example, three tanks 7 are housed at the front portion of the travel vehicle body 2 and four tanks 7 are housed at the rear portion of the travel vehicle body 2. Additionally, the fuel cell stack 8 is provided at the rear portion of the travel vehicle body 2.

That is, in the working vehicle 1 in the first arrangement example, at least one tank 7 is provided at the front portion of the travel vehicle body 2. Additionally, at least one tank 7 is provided at the rear portion of the travel vehicle body 2.

Additionally, in the working vehicle 1 in the first arrangement example, a plurality (seven in the illustrated example) of the tanks are provided to be arranged in the front-rear direction. These tanks 7 each have a tubular shape elongated in the vehicle-body width direction. Further, the length of each of the tanks 7 in the vehicle-body width direction corresponds to the length of the travel vehicle body 2 in the vehicle-body width direction.

Note that the following relationship is established regarding dimensions and arrangement of the tanks 7 in the working vehicle 1 in the first arrangement example.

As is obvious from FIG. 2, a length (W₁) of the travel vehicle body 2 in the vehicle-body width direction is slightly shorter than a length (W₂) from the right end of the left front wheel 18L to the left end of the right front wheel 18R. A length (W_{T}) of each of the tanks 7 in the vehicle-body width direction is shorter than a length (W₁) of the travel vehicle body 2 in the vehicle-body width direction. That is, a relationship in which Wₜ < W₁ <W₂ is established between the length (W₁) of the travel vehicle body 2 in the vehicle-body width direction and the length (W_{T}) of each of the tanks 7 in the vehicle-body width direction.

Additionally, a length from the front end of, among the seven tanks 7 arranged in the front-rear direction, the tank 7 located furthermost forward and the rear end of, among the seven tanks 7, the tank 7 located furthermost rearward is denoted by L_{T}. A length from the front end of the left front wheel 18L to the rear end of the rear wheel 19L (left rear wheel 19L) and a length from the front end of the right front wheel 18R to the rear end of the rear wheel 19R (right rear wheel 19R) are each denoted by L₀. Here, the length L_{T} and the length L₀ are substantially equal to each other.

In the working vehicle 1 in the first arrangement example, a plurality of the tanks 7 are housed at substantially equal intervals in the front-rear direction, and the weights of the plurality of tanks 7 are uniformly applied to the travel vehicle body 2. Therefore, it is possible in the working vehicle 1 in the first arrangement example to obtain an effect in which desirable weight balance in the front-rear direction is achieved.

### [Second Arrangement Example]

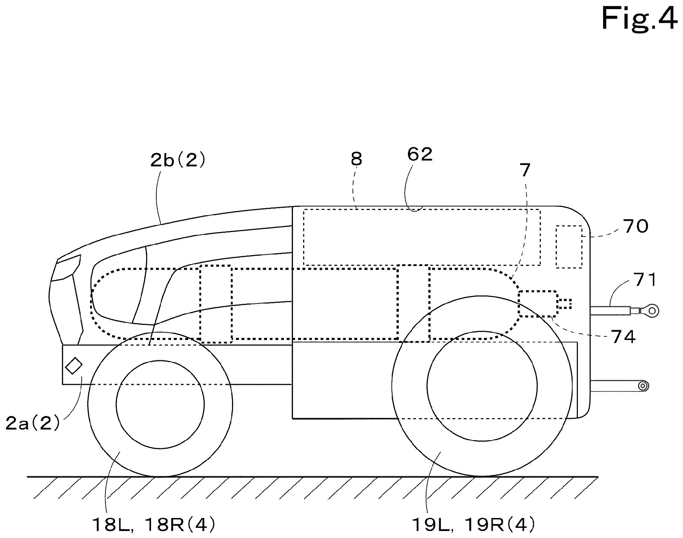

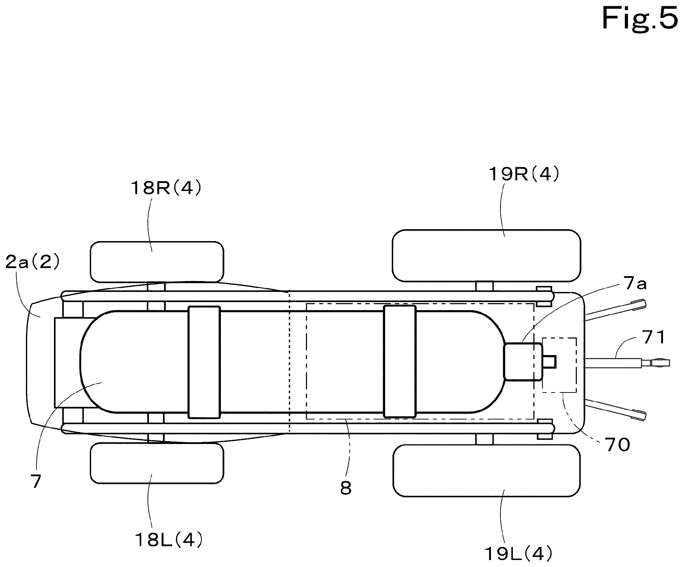

As illustrated in FIG. 4 and FIG. 5, a single tank 7 having a length with which the tank 7 extends over the entire length (entire length in the front-rear direction) from the front end to the rear end of the travel vehicle body 2 is housed in the working vehicle 1 in the second arrangement example. The fuel cell stack 8 is provided at the rear portion of the travel vehicle body 2.

That is, in the working vehicle 1 in the second arrangement example, at least one tank 7 is provided at the front portion of the travel vehicle body 2. At the rear portion of the travel vehicle body 2, at least one tank 7 is provided.

Additionally, the working vehicle 1 in the second arrangement example has a tubular shape elongated in the front-rear direction.

In the working vehicle 1 in the second arrangement example, a single tank 7 extending in the front-rear direction is housed, and the weight of the single tank 7 is uniformly applied to the travel vehicle body 2. Therefore, it is possible in the working vehicle 1 in the second arrangement example to obtain an effect in which desirable weight balance in the front-rear direction is achieved.

### [Third Arrangement Example]

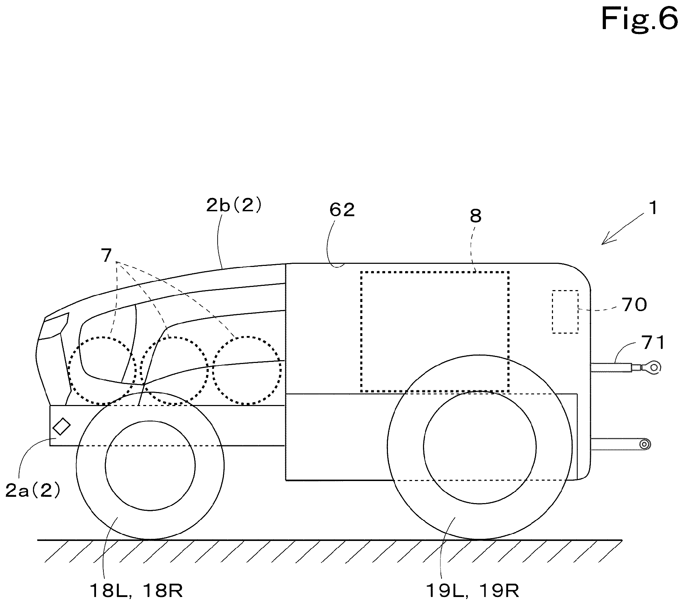

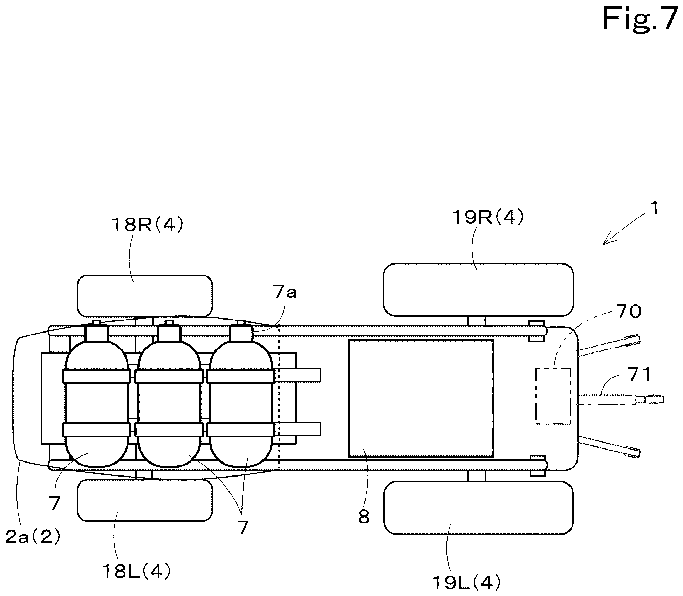

As illustrated in FIG. 6 and FIG. 7, in the working vehicle 1 in the third arrangement example, three tanks 7 are housed at the front portion of the travel vehicle body 2. However, no tank 7 is housed at the rear portion of the travel vehicle body 2. The fuel cell stack 8 is provided at the rear portion of the travel vehicle body 2.

That is, the working vehicle 1 in the third arrangement example uses an arrangement example in which at least one tank 7 is provided at the front portion of the travel vehicle body 2 and in which the fuel cell stack 8 is provided at the rear portion of the travel vehicle body 2.

Additionally, in the working vehicle 1 in the third arrangement example, a plurality (three in the illustrated example) of tanks are provided at the front portion of the travel vehicle body 2 to be arranged in the front-rear direction. These tanks 7 each have a tubular shape elongated in the vehicle-body width direction. Further, as in the first arrangement example, the length of each of the tanks 7 in the vehicle-body width direction corresponds to the length of the travel vehicle body 2 in the vehicle-body width direction.

In the working vehicle 1 in the third arrangement example, a plurality of the tanks 7, which are heavy, are housed at the front portion of the travel vehicle body 2, and the fuel cell stack 8 is housed. In the working vehicle 1 in the third arrangement example, each of the tanks 7 and the fuel cell stack 8 is easily accessed, and it is possible to improve maintainability and the like.

### [Fourth Arrangement Example]

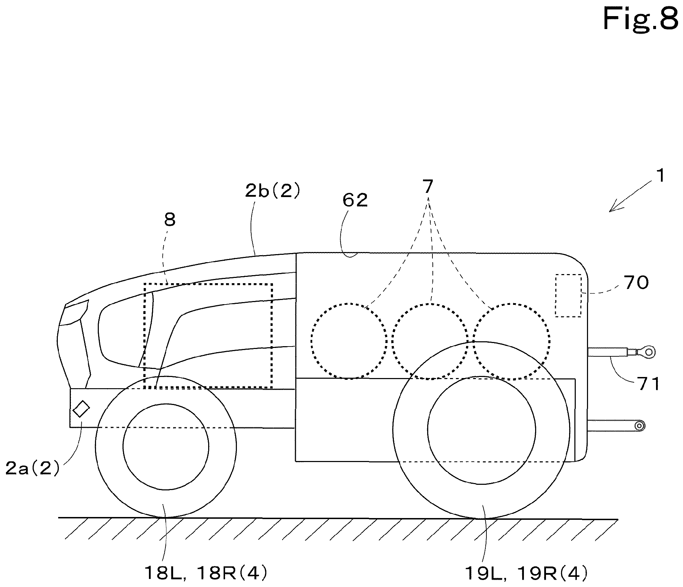

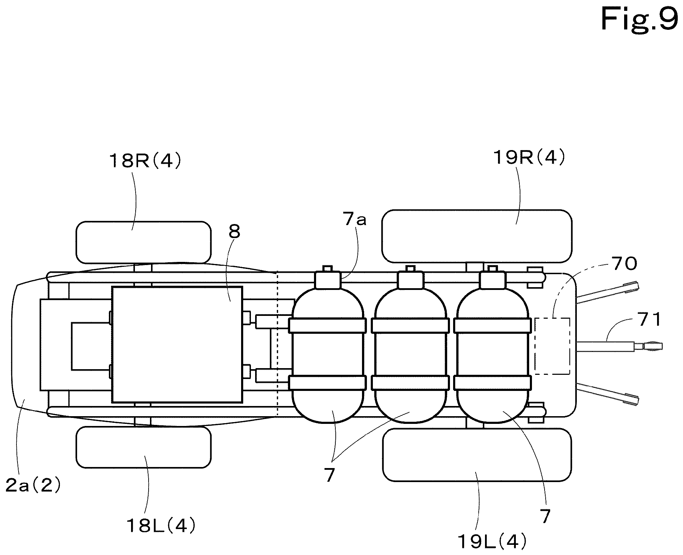

As illustrated in FIG. 8 and FIG. 9, in the working vehicle 1 in the fourth arrangement example, three tanks 7 are housed at the rear portion of the travel vehicle body 2 while no tank 7 is housed at the front portion of the travel vehicle body 2. At the front portion of the travel vehicle body 2, the fuel cell stack 8 is provided.

That is, the working vehicle 1 in the fourth arrangement example uses an arrangement example in which at least one tank 7 is provided at the rear portion of the travel vehicle body 2 and in which the fuel cell stack 8 is provided at the front portion of the travel vehicle body 2.

Additionally, in the working vehicle 1 in the fourth arrangement example, a plurality (three in the illustrated example) of the tanks are provided at the rear portion of the travel vehicle body 2 to be arranged in the front-rear direction. These tanks 7 each have a tubular shape elongated in the vehicle-body width direction. Further, as in the first arrangement example, the length of each of the tanks 7 in the vehicle-body width direction corresponds to the length of the travel vehicle body 2 in the vehicle-body width direction.

In the working vehicle 1 in the fourth arrangement example, a plurality of the tanks 7 are housed at the rear portion of the travel vehicle body 2, and the fuel cell stack 8 is housed at the front portion of the travel vehicle body 2. In the working vehicle 1 in the fourth arrangement example, each of the tanks 7 and the fuel cell stack 8 is easily accessed, and it is possible to improve maintainability and the like.

### [Fifth Arrangement Example]

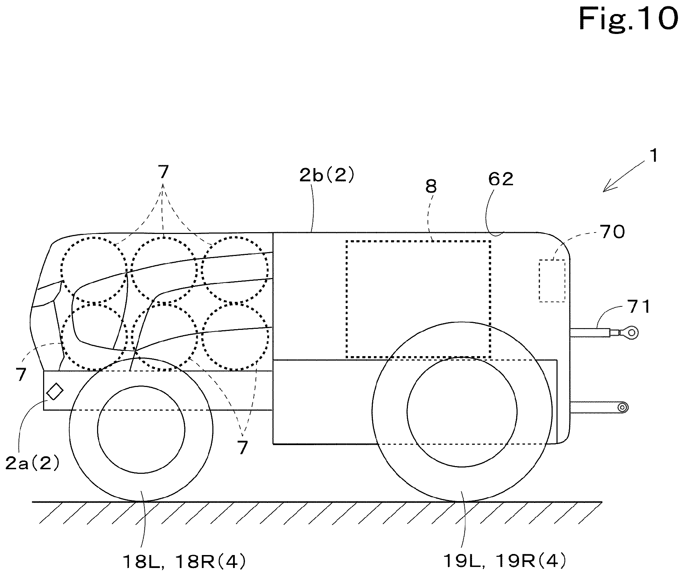

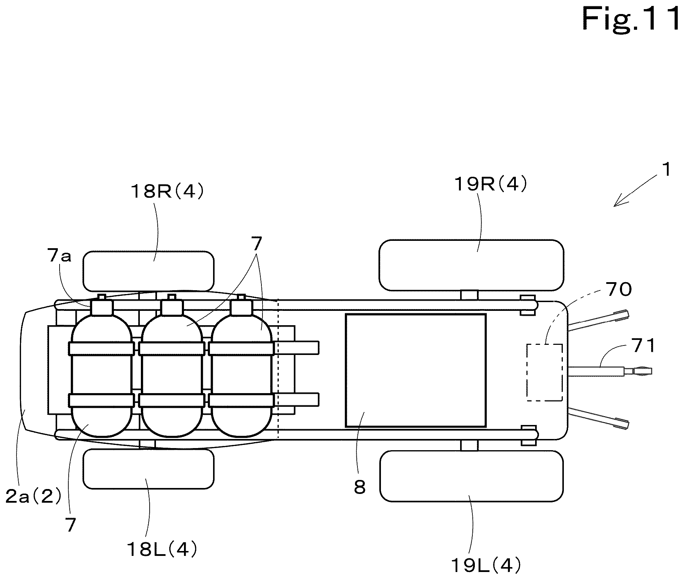

As illustrated in FIG. 10 and FIG. 11, in the working vehicle 1 in the fifth arrangement example, six tanks 7 are housed at the front portion of the travel vehicle body 2 while no tank 7 is housed at the rear portion of the travel vehicle body 2. The fuel cell stack 8 is provided at the rear portion of the travel vehicle body 2.

That is, the working vehicle 1 in the fifth arrangement example uses an arrangement example in which at least one tank 7 is provided at the front portion of the travel vehicle body 2 and in which the fuel cell stack 8 is provided at the rear portion of the travel vehicle body 2.

Additionally, in the working vehicle 1 in the fifth arrangement example, six tanks in total are provided at the front portion of the travel vehicle body 2 such that three tanks are arranged in a row in the front-rear direction on each of two stages, and the two stages are stacked on each other. These tanks 7 each have a tubular shape elongated in the vehicle-body width direction. Further, as in the first arrangement example, the length of each of the tanks 7 in the vehicle-body width direction corresponds to the length of the travel vehicle body 2 in the vehicle-body width direction.

As in the third arrangement example, in the working vehicle 1 in the fifth arrangement example, a plurality of the heavy tanks 7 are housed at the front portion of the travel vehicle body 2, and the fuel cell stack 8 is housed. Therefore, in the working vehicle 1 in the fifth arrangement example, each of the tanks 7 and the fuel cell stack 8 is easily accessed, and it is possible to improve maintainability and the like. Additionally, in addition to these effects, it is also possible due to the large number of the tanks 7 to cause the working vehicle 1 in the fifth arrangement example to travel for a long time compared with the other examples.

### [Sixth Arrangement Example]

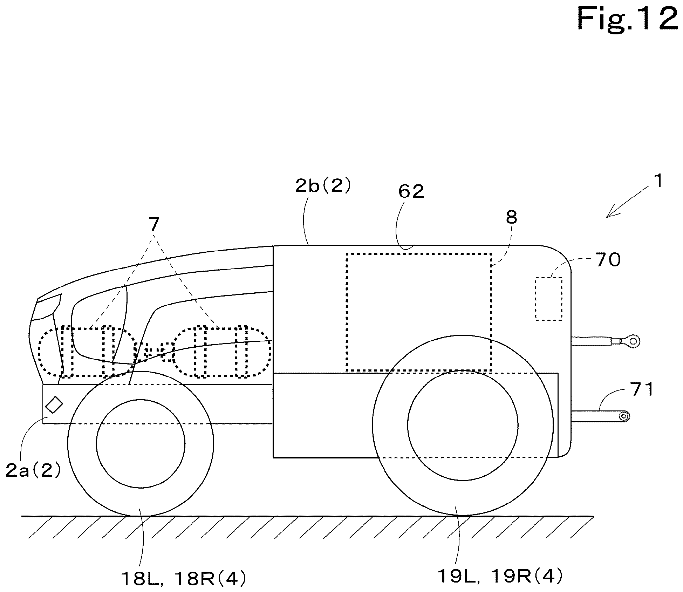

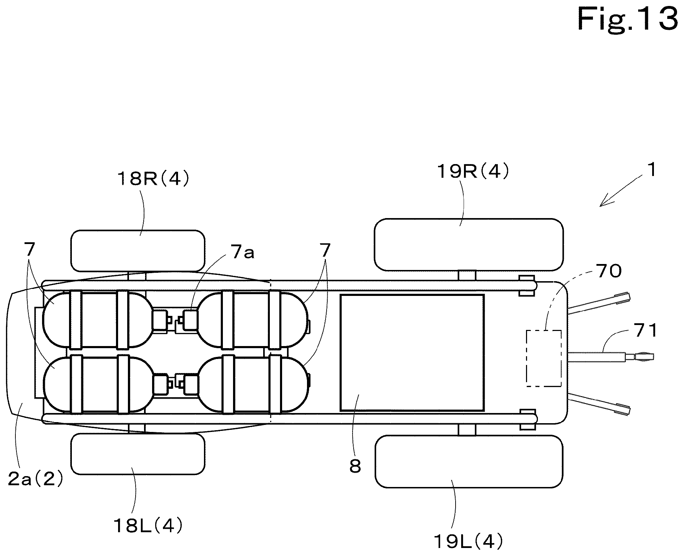

As illustrated in FIG. 12 and FIG. 13, in the working vehicle 1 in the sixth arrangement example, four tanks 7 are housed at the front portion of the travel vehicle body 2 while no tank 7 is housed at the rear portion of the travel vehicle body 2. The fuel cell stack 8 is provided at the rear portion of the travel vehicle body 2.

That is, the working vehicle 1 in the sixth arrangement example uses an arrangement example in which at least one tank 7 is provided at the front portion of the travel vehicle body 2 and in which the fuel cell stack 8 is provided at the rear portion of the travel vehicle body 2.

Additionally, in the working vehicle 1 in the sixth arrangement example, four tanks 7 in total are provided at the front portion of the travel vehicle body 2 such that two tanks 7 are arranged in each row in the vehicle-body width direction and two tanks 7 are arranged in each row in the front-rear direction. These tanks 7 each have a tubular shape elongated in the front-rear direction.

**In** the working vehicle 1 in the sixth arrangement example, the cylindrical tanks 7 are provided such that the axes thereof extend in the front-rear direction. Therefore, in the working vehicle 1 in the sixth arrangement example, the tanks 7 facing each other can be connected to each other by the gas pipe 23 that is short, and the neck 7a of each of the tanks 7 is easily accessed compared with the other examples. Additionally, in addition to these effects, it is also possible in the working vehicle 1 in the sixth arrangement example to improve maintainability in consideration of the neck 7a of each of the tanks 7.

### [Seventh Arrangement Example]

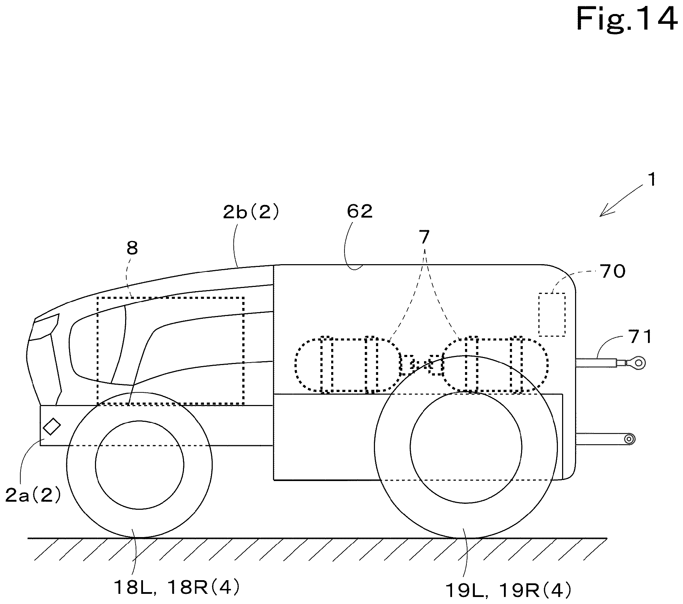

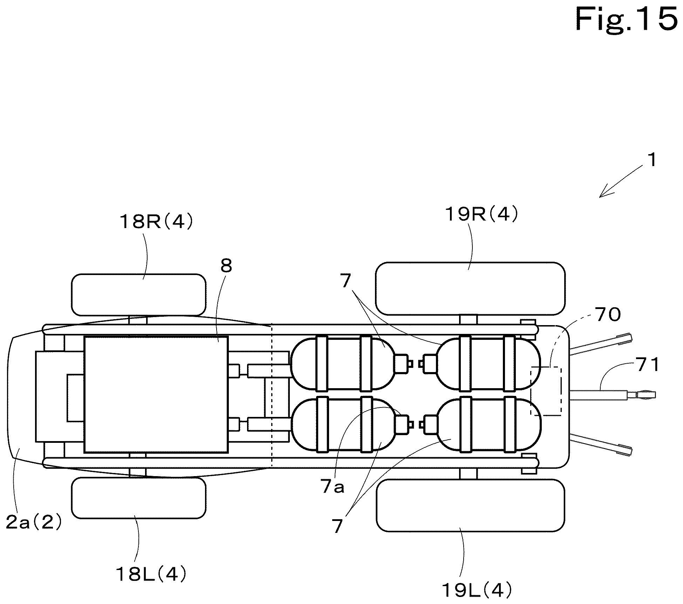

As illustrated in FIG. 14 and FIG. 15, in the working vehicle 1 in the seventh arrangement example, four tanks 7 are housed at the rear portion of the travel vehicle body 2 while no tank 7 is housed at the front portion of the travel vehicle body 2. At the front portion of the travel vehicle body 2, the fuel cell stack 8 is provided.

That is, the working vehicle 1 in the seventh arrangement example uses an arrangement example in which at least one tank 7 is provided at the rear portion of the travel vehicle body 2 and in which the fuel cell stack 8 is provided at the front portion of the travel vehicle body 2.

Additionally, in the working vehicle 1 in the seventh arrangement example, four tanks 7 in total are provided at the rear portion of the travel vehicle body 2 such that two tanks 7 are arranged in each row in the vehicle-body width direction and two tanks 7 are arranged in each row in the front-rear direction. These tanks 7 each have a tubular shape elongated in the front-rear direction.

**In** the working vehicle 1 in the seventh arrangement example, the tubular tanks 7 are provided such that the axes thereof extend in the front-rear direction. As in the sixth arrangement example, it is possible in the working vehicle 1 in the seventh arrangement example to improve maintainability in consideration of the neck 7a of each of the tanks 7. Additionally, in addition to these effects, in the working vehicle 1 in the seventh arrangement example, each of the tanks 7 and the fuel cell stack 8 is easily accessed, and it is possible due to this point to further improve the maintainability.

### [Eighth Arrangement Example]

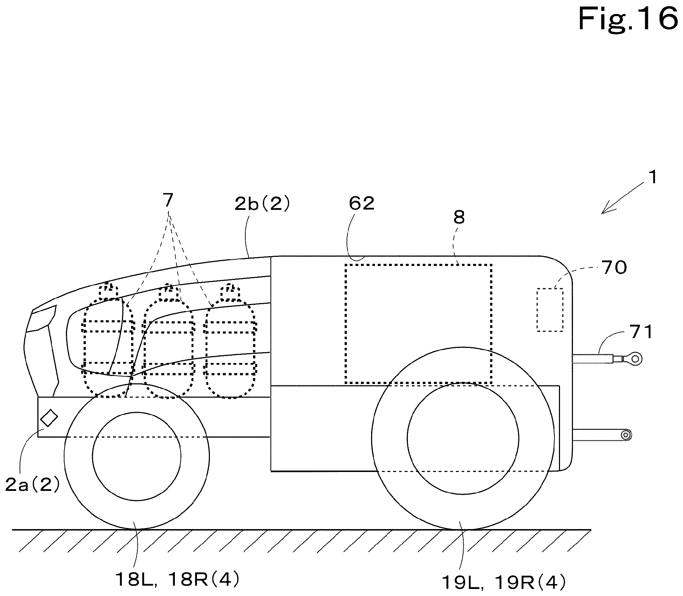

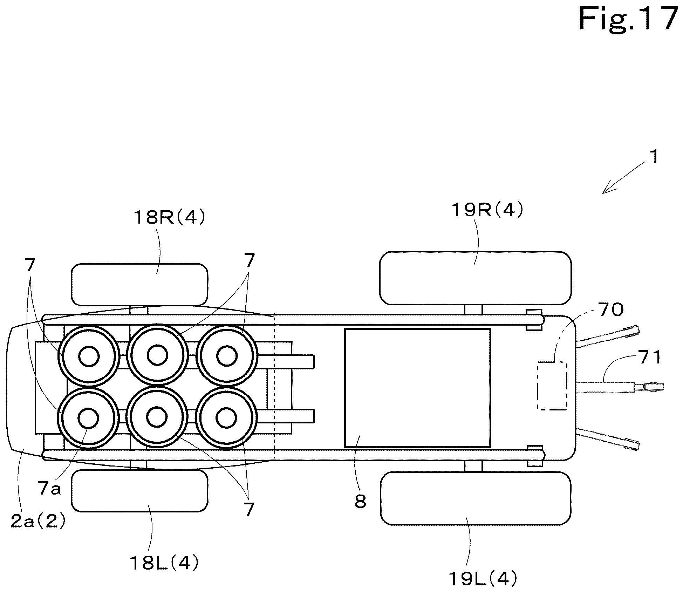

As illustrated in FIG. 16 and FIG. 17, in the working vehicle 1 in the eighth arrangement example, six tanks 7 are housed at the front portion of the travel vehicle body 2 while no tank 7 is housed at the rear portion of the travel vehicle body 2. The fuel cell stack 8 is provided at the rear portion of the travel vehicle body 2.

That is, the working vehicle 1 in the eighth arrangement example uses an arrangement example in which at least one tank 7 is provided at the front portion of the travel vehicle body 2 and in which the fuel cell stack 8 is provided at the rear portion of the travel vehicle body 2.

Additionally, in the working vehicle 1 in the eighth arrangement example, six tanks 7 in total are provided at the front portion of the travel vehicle body 2 such that two tanks 7 are arranged in each row in the vehicle-body width direction and three tanks 7 are arranged in each row in the front-rear direction. The tanks 7 each have a tubular shape elongated in the up-down direction.

In the working vehicle 1 in the eighth arrangement example, the tubular tanks 7 are provided such that the axes thereof extend in the up-down direction, and thus, a large number of the tanks 7 can be housed at the front portion of the travel vehicle body 2. Therefore, it is easy to increase the number of the tanks 7 without the need to arrange a plurality of the tanks 7 in the up-down direction such that the tanks 7 are transversely oriented in the vehicle-body width direction. Additionally, in the working vehicle 1 in the eighth arrangement example, the capacity of each of the tanks 7 can be easily increased. Further, each of the tanks 7 and the fuel cell stack 8 is easily accessed, and it is possible due to this point to further improve the maintainability.

### [Ninth Arrangement Example]

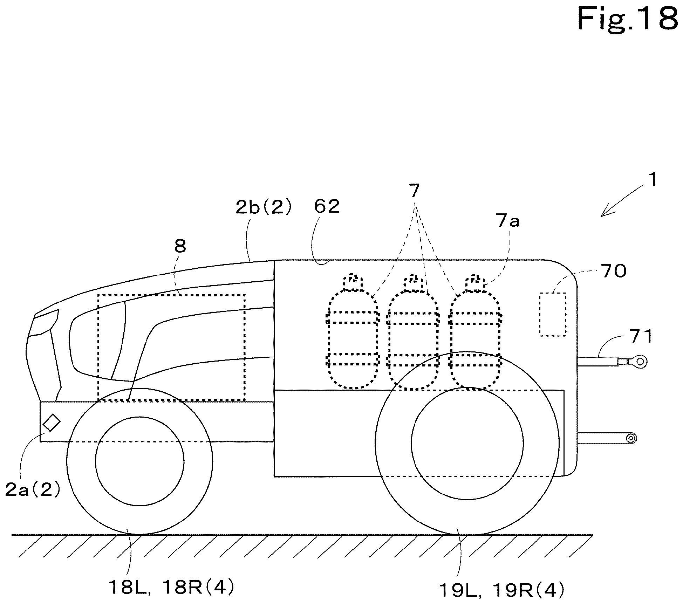

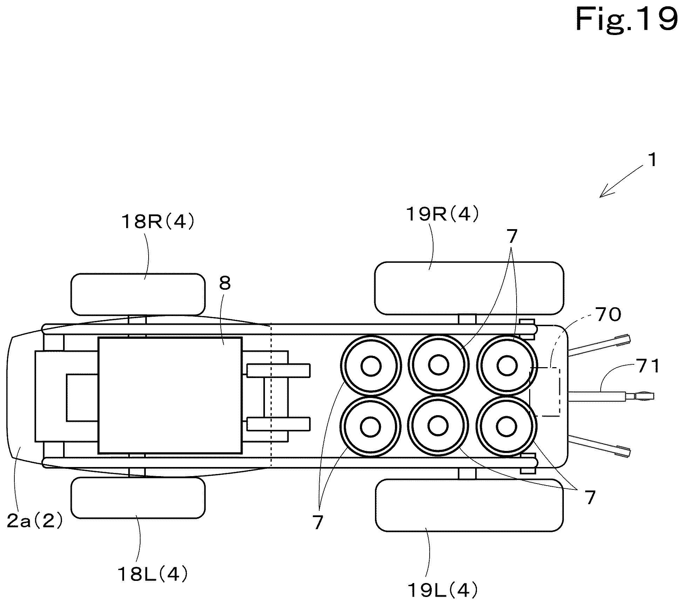

As illustrated in FIG. 18 and FIG. 19, in the working vehicle 1 in the ninth arrangement example, six tanks 7 are housed at the rear portion of the travel vehicle body 2 while no tank 7 is housed at the front portion of the travel vehicle body 2. At the front portion of the travel vehicle body 2, the fuel cell stack 8 is provided.

That is, the working vehicle 1 in the ninth arrangement example uses an arrangement example in which at least one tank 7 is provided at the rear portion of the travel vehicle body 2 and in which the fuel cell stack 8 is provided at the front portion of the travel vehicle body 2.

Additionally, in the working vehicle 1 in the ninth arrangement example, six tanks 7 in total are provided at the rear portion of the travel vehicle body 2 such that two tanks 7 are arranged in each row in the vehicle-body width direction and three tanks 7 are arranged in each row in the front-rear direction. The tanks 7 each have a tubular shape elongated in the up-down direction.

In the working vehicle 1 in the ninth arrangement example, the tubular tanks 7 are provided such that the axes thereof extend in the up-down direction, and thus, a large number of the tanks 7 can be housed at the rear portion of the travel vehicle body 2. Therefore, it is easy in the ninth arrangement example to increase the number of the tanks 7 without the need to arrange a plurality of the tanks 7 in the up-down direction such that the tanks 7 are transversely oriented in the vehicle-body width direction. Additionally, in the ninth arrangement example, the capacity of each of the tanks 7 can be easily increased. Additionally, each of the tanks 7 and the fuel cell stack 8 is easily accessed, and it is possible due to this point to further improve the maintainability.

### [Tenth Arrangement Example]

As illustrated in FIG. 20 and FIG. 21, differently from the working vehicles 1 in the first arrangement example to the ninth arrangement example, the working vehicle 1 in the tenth arrangement example includes, instead of the front and rear wheels 18 and 19 of a wheel type, the front and rear wheels 18 and 19 of a crawler type.

In the working vehicle 1 in the tenth arrangement example, seven tanks 7 are housed between the front end to the rear end of the travel vehicle body 2. Additionally, the fuel cell stack 8 is provided at the rear portion of the travel vehicle body 2.

That is, the working vehicle 1 in the tenth arrangement example uses an arrangement example in which at least one tank 7 is provided at the front portion of the travel vehicle body 2 or in which at least one tank 7 is provided at the rear portion of the travel vehicle body 2.

Additionally, in the working vehicle 1 in the tenth arrangement example, a plurality (seven in the illustrated example) of the tanks are provided to be arranged in the front-rear direction. These tanks 7 each have a tubular shape elongated in the vehicle-body width direction. Further, the length of each of the tanks 7 in the vehicle-body width direction corresponds to the length of the travel vehicle body 2 in the vehicle-body width direction.

As in the first arrangement example, in the working vehicle 1 in the tenth arrangement example, a plurality of the tanks 7 are housed at substantially equal intervals in the front-rear direction, and the weights of the plurality of tanks 7 are uniformly applied to the travel vehicle body 2. Therefore, it is possible in the working vehicle 1 in the tenth arrangement example to obtain an effect in which desirable weight balance in the front-rear direction is achieved.

The arrangements of the tanks 7 in the first arrangement example to the tenth arrangement example are sorted into the following arrangement patterns (1) to (3).
(1) At least one tank 7 is provided at the front portion of the travel vehicle body 2.
   The arrangement pattern (1) includes the first arrangement example illustrated in FIG. 1 and FIG. 2, the third arrangement example illustrated in FIG. 6 and FIG. 7, and the fifth arrangement example illustrated in FIG. 10 and FIG. 11. The arrangement pattern (1) includes the sixth arrangement example illustrated in FIG. 12 and FIG. 13, the seventh arrangement example illustrated in FIG. 16 and FIG. 17, the ninth arrangement example illustrated in FIG. 20 and FIG. 21.
(2) At least one tank 7 is provided at the rear portion of the travel vehicle body 2.

The arrangement pattern (2) includes the first arrangement example, the fourth arrangement example illustrated in FIG. 8 and FIG. 9, and the seventh arrangement example illustrated in FIG. 14 and FIG. 15. The arrangement pattern (2) includes the arrangement example and the ninth arrangement example illustrated in FIG. 20 and FIG. 21.

The arrangement pattern (3) includes the first arrangement example, the second arrangement example illustrated in FIG. 4 and FIG. 5, and the fifth arrangement example illustrated in FIG. 20 and FIG. 21.

Note that when the arrangement patterns are sorted focusing on the fuel cell stack 8, which is heavy similarly to the tanks 7, the arrangement pattern in which the fuel cell stack 8 is arranged at the front portion of the travel vehicle body 2 includes the fourth arrangement example illustrated in FIG. 8 and FIG. 9, the seventh arrangement example illustrated in FIG. 14 and FIG. 15, and the eighth arrangement example illustrated in FIG. 18 and FIG. 19.

Additionally, the arrangement pattern in which the fuel cell stack 8 is arranged at the rear portion of the travel vehicle body 2 includes the first arrangement example, the second arrangement example illustrated in FIG. 4 and FIG. 5, the third arrangement example illustrated in FIG. 6 and FIG. 7, the fifth arrangement example illustrated in FIG. 10 and FIG. 11, the sixth arrangement example illustrated in FIG. 12 and FIG. 13, the seventh arrangement example illustrated in FIG. 16 and FIG. 17, and the ninth arrangement example illustrated in FIG. 20 and FIG. 21.

Note that when the arrangement patterns are sorted focusing on the fuel cell stack 8, which is heavy similarly to the tanks 7, the arrangement pattern in which the fuel cell stack 8 is arranged at the front portion of the travel vehicle body 2 includes the fourth arrangement example illustrated in FIG. 8 and FIG. 9, the seventh arrangement example illustrated in FIG. 14 and FIG. 15, and the eighth arrangement example illustrated in FIG. 18 and FIG. 19.

Additionally, the arrangement pattern in which the fuel cell stack 8 is arranged at the rear portion of the travel vehicle body 2 includes the first arrangement example, the second arrangement example illustrated in FIG. 4 and FIG. 5, the third arrangement example illustrated in FIG. 6 and FIG. 7, the fifth arrangement example illustrated in FIG. 10 and FIG. 11, the sixth arrangement example illustrated in FIG. 12 and FIG. 13, the seventh arrangement example illustrated in FIG. 16 and FIG. 17, and the ninth arrangement example illustrated in FIG. 20 and FIG. 21.

The working vehicle 1 in each of the first arrangement example to the tenth arrangement example described above includes a support member 72.

For example, the support member 72 is a member that holds the tanks 7, which tend to roll, in a state of lying in the horizontal direction. As the support member 72, a member having a shape similar to a case that houses the tanks 7 or a rack or lattice-like frame shape so that a plurality of the tanks 7 can be held in a state of lying in the horizontal direction is usable.

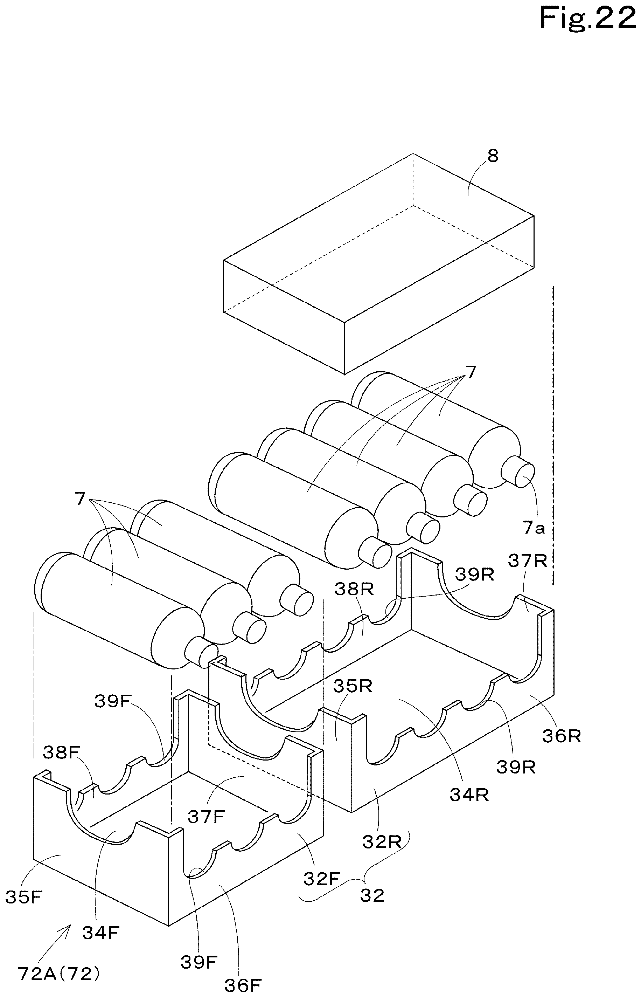

Hereinafter, the support member 72 provided in the working vehicle 1 of the present embodiment will be described with FIG. 22 to FIG. 25.

The support member 72 (hereinafter, the support member 72 illustrated in FIG. 22 will be referred to as the first support member 72A) illustrated in FIG. 22 holds a plurality of tanks in the horizontal direction and holds the plurality of tanks so as to be arranged in the front-rear direction. The first support member 72A is the support member 72 provided in the working vehicle 1 in the first arrangement example illustrated in FIG. 1 and FIG. 2.

The first support member 72A includes a tank unit 31 that houses a plurality (seven in the illustrated example) of the tanks 7. The tank unit 31 includes a tank casing 32 capable of housing one or a plurality of the tanks 7. The tank unit 31 may include a single tank casing 32 or a plurality of the tank casings 32. The first support member 72A (tank unit 31) in the present embodiment includes two tank casings 32, which are a front casing 32F provided at the front portion of the travel vehicle body 2 and a rear casing 32R provided at the rear portion of the travel vehicle body 2.

The front casing 32F is provided at the front portion of the travel vehicle body 2 and houses three tanks 7. The rear casing 32R is provided at the rear portion of the travel vehicle body 2 and houses four tanks 7. The fuel cell stack 8 is provided above the rear casing 32R. Additionally, the front casing 32F and the rear casing 32R are installed at substantially the same heights in the up-down direction and provided to be arranged in the front-rear direction.

The gas pipe 23 (not illustrated in FIG. 22; see FIG. 3), which guides the hydrogen gas in the tanks 7, is provided for each of the tanks 7 in the tank unit 31. The valve unit 33, through which the hydrogen gases introduced through the gas pipes 23 are mixed together or the like and adjusted to a predetermined flow rate and then sent to the fuel cell stack 8, is provided at ends of the gas pipes 23. The valve unit 33 in the present embodiment is provided outside the tank unit 31, accurately, at an intermediate position in the front-rear direction of the travel vehicle body 2 and between (at the left end) the left front wheel 18L and the left rear wheel 19L (see FIG. 2).

**In** the tank casing 32 in the present embodiment, the front casing 32F and the rear casing 32R are each fixed (rigid fixation) to the travel vehicle body 2 by a fastening member, such as a bolt or the like or by welding or the like. Additionally, the front casing 32F and the rear casing 32R each have a box shape. Each of the front casing 32F and the rear casing 32R is made of a thick steel material and/or the like to have an appearance that has larger internal dimensions than the tanks 7 and that is open upward. Having the box shape, each of the front casing 32F and the rear casing 32R is capable of housing a plurality of the tanks 7 arranged inside the box and is capable of protecting the tanks 7 from the outside thermally and physically.

Specifically, the front casing 32F in the present embodiment has an appearance of a rectangular parallelepiped that is longer in the front-rear direction than in the vehicle-body width direction. The front casing 32F includes a rectangular plate-shaped bottom 34F. The bottom 34F is made of a rectangular plate material having front, rear, left, and right sides. At a front portion of the front casing 32F, a front wall 35F extends upright from the front edge (front side) of the bottom 34F in the up-down direction. At a left portion of the front casing 32F, a left wall 36F extends upright from the left edge (left side) of the bottom 34F in the up-down direction. At a rear portion of the front casing 32F, a rear wall 37F extends upright from the rear edge (rear side) of the bottom 34F in the up-down direction. At a right portion of the bottom 34F, a right wall 38F extends upright from the right edge (right side) of the bottom 34F in the up-down direction. The front wall 35F, the left wall 36F, the rear wall 37F, and the right wall 38F are provided so as to surround the periphery of the bottom 34F. The bottom 34F of the front casing 32F is fastened by a bolt or the like or fixed by means such as welding or the like to an upper portion of the travel vehicle body 2.

Additionally, as with the front casing 32F, the rear casing 32R in the present embodiment has an appearance of a rectangular parallelepiped that is longer in the front-rear direction than in the vehicle-body width direction. The rear casing 32R includes a rectangular plate-shaped bottom 34R. The bottom 34R is made of a rectangular plate material having front, rear, left, and right sides. At a front portion of the rear casing 32R, a front wall 35R extends upright from the front edge (front side) of the bottom 34R in the up-down direction. At a left portion of the rear casing 32R, a left wall 36R extends upright from the left edge (left side) of the bottom 34R in the up-down direction. At a rear portion of the rear casing 32R, a rear wall 37R extends upright from the rear edge (rear side) of the bottom 34R in the up-down direction. At a right portion of the rear casing 32R, a right wall 38R extends upright from the right edge (right side) of the bottom 34R in the up-down direction. The front wall 35R, the left wall 36R, the rear wall 37R, and the right wall 38R are provided so as to surround the periphery of the bottom 34R. The bottom 34R of the rear casing 32R is fastened by a bolt or the like or fixed by means such as welding or the like to an upper portion of the travel vehicle body 2.

**In** each of the front casing 32F and the rear casing 32R, at least one of the front, rear, left, and right side walls has a downwardly recessed cutout 39. Specifically, the upper edge of each of the front wall 35F and the rear wall 37F of the front casing 32F has downwardly recessed arc-shaped cutout(s) 39F. The upper edge of each of the front wall 35R and the rear wall 37R of the rear casing 32R has downwardly recessed arc-shaped cutout(s) 39R. Each of the number of the cutouts 39F and the number of the cutouts 39R corresponds to the number of the tanks 7 to be housed. For example, each of the front wall 35F and the rear wall 37F of the front casing 32F has the cutouts 39 at three portions, and each of the front wall 35R and the rear wall 37R of the rear casing 32R has the cutouts 39 at four portions.

Thus, the front casing 32F and the rear casing 32R are capable of housing the tanks 7 such that the necks 7a are fitted to the cutouts 39 to avoid horizontal shaking and rolling of the tanks 7. Additionally, it is possible to arrange a plurality of the tanks 7 stably in the vehicle-body width direction of the tank casing 32.

Note that, although the tank casing 32 in the present embodiment has a box shape, a shelf, a rack, or the like capable of housing the tanks 7 may be used as the tank casing 32 in the present invention. Additionally, although an example in which both of the front wall 35 and the rear wall 37 has at least one cutout 39 is presented for the tank casing 32 in the present embodiment, only one (the one at which the neck 7a of the tank 7 is provided) of the front wall 35 and the rear wall 37 may have at least one cutout 39. Further, although the side walls that have the cutouts 39 are the front wall 35 and the rear wall 37 in the tank casing 32 in the present embodiment, each of the left wall 36 and the right wall 38 may have at least one cutout 39 (the tank 7 may be housed in a state of lying in the left-right direction).

**In** the first support member 72A, seven tanks 7 are provided horizontally in the front-rear direction by arranging the front casing 32F and the rear casing 32R described above in the front-rear direction. With such a first support member 72A provided, it is possible to hold the tanks 7, which tend to roll, stably in a state of lying in the horizontal direction. Additionally, since the first support member 72A protects the tanks 7 from impact, heat, and the like applied from the outside, it is possible to avoid damage to the tanks 7. Further, by using the first support member 72A separated into a plurality of members as the front casing 32F and the rear casing 32R, it is possible to divide and detach a plurality of the tanks 7 partially, which makes it possible to improve the maintainability of the working vehicle 1.

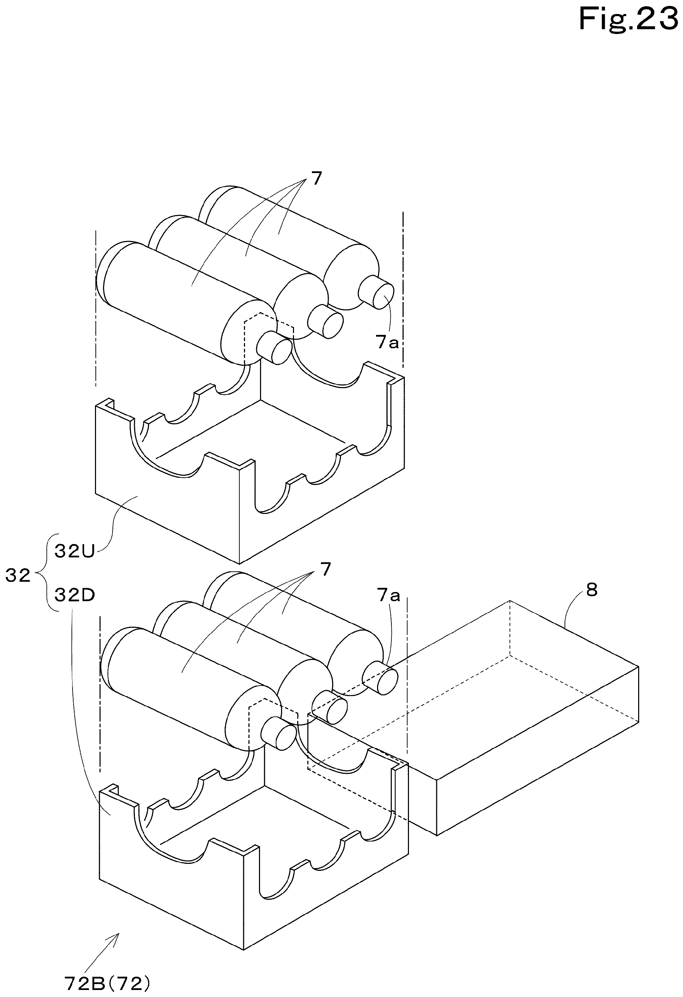

The support member 72 (hereinafter, the support member 72 illustrated in FIG. 23 will be referred to as the second support member 72B) illustrated in FIG. 23 holds a plurality of tanks in the horizontal direction and also holds the plurality of tanks in a state of being stacked in the up-down direction. The second support member 72B is the support member 72 that is provided in the working vehicle 1 in the fifth arrangement example illustrated in FIG. 10 and FIG. 11.

The second support member 72B includes the tank casing 32 that houses a plurality (six in the illustrated example) of the tanks 7. The tank casing 32 further includes a lower casing 32D provided in a lower location at the front portion of the travel vehicle body 2 and an upper casing 32U provided in an upper location at the front portion of the travel vehicle body 2. The lower casing 32D houses three tanks 7, and the upper casing 32U houses three tanks 7. The lower casing 32D is fixed to the travel vehicle body 2 by a fastening member such as a bolt or the like or by welding or the like. The lower casing 32D and the upper casing 32U each have larger internal dimensions than the tanks 7 described above and are each capable of housing a plurality of the tanks 7. Each of the front casing 32F and the rear casing 32R in the present embodiment is made of a thick steel material and/or the like capable of protecting the tanks 7 from the outside thermally and physically and has a box shape that is open upward.

A fixation member that links and fixes the upper end of the upper casing 32U to a lower portion of the lower casing 32D is provided between the lower casing 32D and the upper casing 32U described above. As the fixation member, a bolt or the like that fixes the upper end of the upper casing 32U to a lower portion of the lower casing 32D is usable. Additionally or alternatively, as the fixation member, a projection or the like with which the upper end of the upper casing 32U is fitted to a lower portion of the lower casing 32D may be used.

By arranging the lower casing 32D and the upper casing 32U described above so as to be stacked in the up-down direction, it is possible in the second support member 72B to provide a plurality of the tanks 7 so as to be placed collectively at a single location in the horizontal direction. Therefore, it is possible when the second support member 72B is provided at the front portion of the travel vehicle body 2 to house a large number of the tanks 7 at the front portion of the travel vehicle body 2 and possible when the second support member 72B is provided at the rear portion of the travel vehicle body 2 to house a large number of the tanks 7 at the rear portion of the travel vehicle body 2.

As with the first support member 72A, it is possible when such a second support member 72B is provided to hold the tanks 7, which tend to roll, stably in a state of lying in the horizontal direction. Additionally, as with the first support member 72A, since the second support member 72B also protects the tanks 7 from impact, heat, and the like applied from the outside, it is possible to avoid damage to the tanks 7. Further, by using the second support member 72B separated into a plurality of members as the lower casing 32D and the upper casing 32U, it is possible to vertically divide and detach a plurality of the tanks 7, which makes it possible to improve the maintainability of the working vehicle 1.

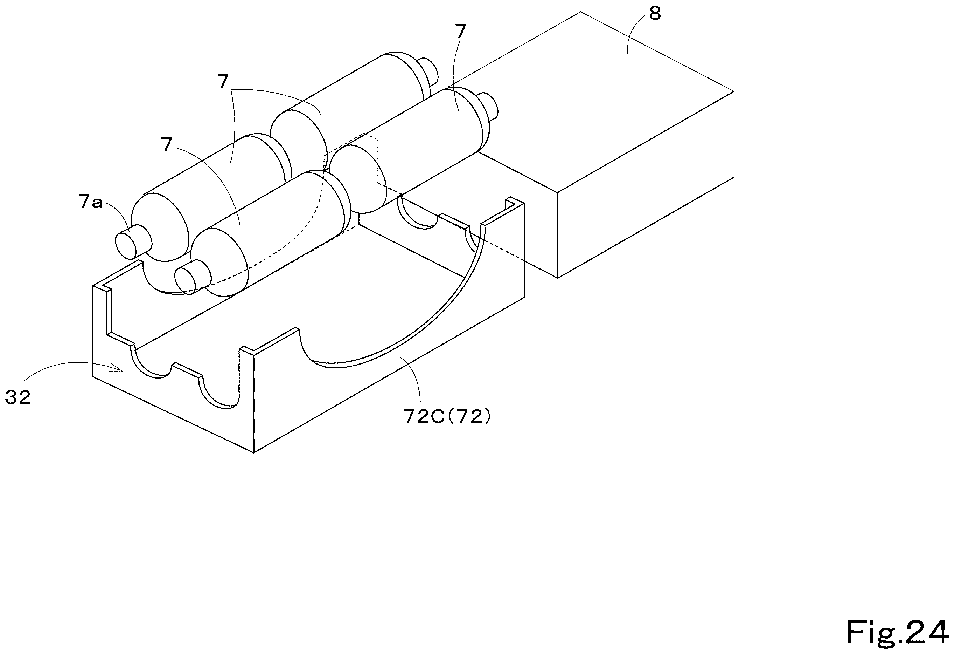

The support member 72 (hereinafter, the support member 72 illustrated in FIG. 24 will be referred to as the third support member 72C) illustrated in FIG. 24 holds a plurality of tanks in the horizontal direction and holds the plurality of tanks so as to be arranged in the vehicle-body width direction. The third support member 72C is the support member 72 provided in the working vehicle 1 in the sixth arrangement example illustrated in FIG. 12 and FIG. 13.

The third support member 72C houses a plurality (four in the illustrated example) of the tanks 7. Specifically, the third support member 72C houses four tanks 7 in total such that two tanks 7 are arranged in each row in the vehicle-body width direction and two tanks 7 are arranged in each row in the front-rear direction. The third support member 72C is fixed to the travel vehicle body 2 by a fastening member such as a bolt or the like or by welding or the like. The third support member 72C has larger internal dimensions than the above-described tanks 7 and is capable of housing a plurality of the tanks 7. As with the first support member 72A and the second support member 72B described above, the third support member 72C is made of a thick steel material and/or the like capable of protecting the tanks 7 from the outside thermally and physically and has a box shape that is open upward.

By arranging the tanks 7 in the vehicle-body width direction, it is possible in the third support member 72C to provide a plurality of the tanks 7 so as to be placed collectively at a single location in the front-rear direction. Therefore, it is possible when the third support member 72C is provided at the front portion of the travel vehicle body 2 to house a large number of the tanks 7 at the front portion of the travel vehicle body 2 and possible when the third support member 72C is provided at the rear portion of the travel vehicle body 2 to house a large number of the tanks 7 at the rear portion of the travel vehicle body 2.

As with the first support member 72A and the second support member 72B, it is possible when such a third support member 72C is provided to hold the tanks 7, which tend to roll, stably in a state of lying in the horizontal direction. Additionally, since the third support member 72C protects the tanks 7 from impact, heat, and the like applied from the outside, it is possible to avoid damage to the tanks 7.

Note that the first support member 72A, the second support member 72B, and the third support member 72C described above can be used by being combined together. A plurality of the tanks 7 arranged in the front-rear direction may be stacked in a plurality of stages in the up-down direction by combining the first support member 72A with the second support member 72B. Alternatively, a plurality of the tanks 7 arranged in the left-right direction may be stacked in a plurality of stages in the up-down direction by combining the second support member 72B with the third support member 72C.

Additionally, when a plurality of the tanks 7 each having a tubular shape extending in the up-down direction are to be held in a state of standing upright in the up-down direction, a fourth support member 72D that differs from each of the first support member 72A to the third support member 72C described above is usable.

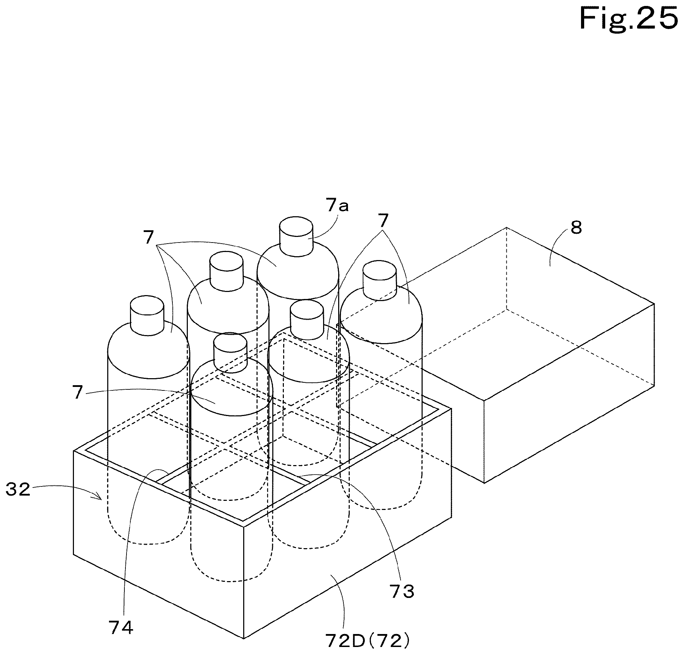

The fourth support member 72D illustrated in FIG. 25 holds a plurality of tanks in a state of standing upright in the up-down direction and holds the plurality of tanks so as to be arranged in the horizontal direction. The fourth support member 72D is the support member 72 that is provided in the working vehicle 1 in the eighth arrangement example or the ninth arrangement example illustrated in FIG. 16 to FIG. 19.

The fourth support member 72D houses a plurality (six in the illustrated example) of the tanks 7. Specifically, the fourth support member 72D houses six tanks 7 in total such that two tanks 7 are arranged in each row in the vehicle-body width direction and three tanks 7 are arranged in each row in the front-rear direction. As with the first support member 72A to the third support member 72C, the fourth support member 72D is fixed to the travel vehicle body 2 by a fastening member such as a bolt or the like or by welding or the like. As with the first support member 72A to the third support member 72C described above, the fourth support member 72D is made of a thick steel material and/or the like capable of protecting the tanks 7 from the outside thermally and physically and has a box shape that is open upward.

The fourth support member 72D includes at least one first partition wall 73 that partitions a plurality of the tanks 7 from each other in the front-rear direction and at least one second partition wall 74 that partitions the plurality of tanks 7 from each other in the vehicle-body width direction (left-right direction) so that the tanks 7 are arranged in the vehicle-body width direction and the front-rear direction. The first partition wall 73 is provided correspondingly to the number of the tanks 7 that are to be housed in the front-rear direction in the fourth support member 72D such that the number of the first partition walls 73 is one less than the number of the tanks 7. Additionally, the second partition wall 74 is provided correspondingly to the number of the tanks 7 that are to be housed in the vehicle-body width direction in the fourth support member 72D such that the number of the second partition walls 74 is one less than the number of the tanks 7. Additionally, an interval between the first partition walls 73 adjacent to each other and an interval between each first partition wall 73 and an outer wall of the fourth support member 72D each have a dimension that is slightly larger than the outside diameter of each of the tanks 7. Additionally, an interval between the second partition walls 74 adjacent to each other and an interval between each second partition wall 74 and the outer wall of the fourth support member 72D each have a dimension that is slightly larger than the outside diameter of each of the tanks 7.

When the first partition wall 73 and the second partition wall 74 such as those described above are provided, the tanks 7 do not fall down even when a plurality of the tanks 7 are arranged in a state of standing upright, and it is possible to arrange a plurality of the tanks 7 stably. Additionally, when a plurality of the tanks 7 are arranged in a state of standing upright in the horizontal direction, it is possible to provide a large number of the tanks 7 so as to be placed collectively at a single location in the horizontal direction. Therefore, it is possible when the fourth support member 72D is provided to house a large number of the tanks 7 at an upper portion of the travel vehicle body 2.

The working vehicle 1 of the present invention includes the travel vehicle body 2 capable of traveling in response to an external command and allowing the working device 49 to be mounted on the travel vehicle body 2; the drive device 5 provided at the travel vehicle body 2 to generate a driving force for the travel vehicle body 2; at least one tank 7 that houses a gas that is an energy source of the driving force; and the controller 70 that controls travel of the travel vehicle body 2 autonomously or based on an external command, in which at least a portion of the tank 7 is provided at one of the front portion and the rear portion of the travel vehicle body 2.

When at least a portion of the tank 7 is provided at one of the front portion and the rear portion of the travel vehicle body 2 as described above, it is possible to arrange the tank 7 that is heavy with optimal weight balance in the front-rear direction when travel is performed autonomously or based on an external command.

**In** the working vehicle 1 of the present invention, the drive device 5 includes the fuel cell (fuel cell stack) 8 that generates electric power by using a gas in the tank 7; the battery 20 that stores electric power generated by the fuel cell 8; and the drive motor 6 that is driven by electric power generated by the fuel cell 8.

**In** a fuel cell vehicle that includes the fuel cell 8, the battery 20, and the drive motor 6 as described above, the tank 7 tends to have the heaviest weight among members, and it is thus possible to clearly obtain an effect of arranging the tank 7 with appropriate weight balance in the front-rear direction.

**In** the working vehicle 1 of the present invention, at least one tank 7 is provided at the front portion of the travel vehicle body 2, and the fuel cell 8 is provided at the rear portion of the travel vehicle body 2.

When the heavy tank 7 is provided at the front portion of the travel vehicle body 2 as described above, it is possible to achieve weight balance in the front-rear direction of the working vehicle 1 easily when, for example, the working device 49 is linked to the rear portion.

**In** the working vehicle 1 of the present invention, a plurality of the tanks 7 are provided to be arranged in the front-rear direction.

When a plurality of the tanks 7 are provided to be arranged in the front-rear direction as described above, it is possible to reduce the dimension of the travel vehicle body 2 in the vehicle-body width direction and thus is possible to provide the working vehicle 1 that is optimal for a small machine or the like that performs work in a narrow work place.

In the working vehicle 1 of the present invention, each tank 7 has a tubular shape extending in the vehicle-body width direction, and the length of the tank 7 in the vehicle-body width direction corresponds to the length of the travel vehicle body 2 in the vehicle-body width direction.

When, as described above, each tank 7 has a tubular shape extending in the vehicle-body width direction and the length of the tank 7 in the vehicle-body width direction corresponds to the length of the travel vehicle body 2 in the vehicle-body width direction, it is possible without waste to house a large number of the tanks 7 at an upper portion of the travel vehicle body 2.

In the working vehicle 1 of the present embodiment, each tank 7 has a tubular shape extending in the front-rear direction.

When, as described above, each tank 7 has a tubular shape extending in the front-rear direction, it is possible without waste to house each tank 7 at an upper portion of the travel vehicle body 2 so as not to protrude width-direction outward from the travel vehicle body 2 and possible to obtain the working vehicle 1 that is compact and slim.

In the working vehicle 1 of the present invention, the length of each tank 7 in the front-rear direction corresponds to the length from the front portion to the rear portion of the travel vehicle body 2.

When, as described above, the length of each tank 7 in the front-rear direction corresponds to the length from the front portion to the rear portion of the travel vehicle body 2, it is possible without waste to house each tank 7 at an upper portion of the travel vehicle body 2 so as not to protrude from the travel vehicle body 2 in the front-rear direction and possible to house each tank 7 efficiently in the working vehicle 1.

In the working vehicle 1 of the present invention, a plurality of the tanks 7 are provided to be arranged in the front-rear direction.

When, as described above, a plurality of the tanks 7 are provided to be arranged in the front-rear direction, it is possible without waste to house the tanks 7 at an upper portion of the travel vehicle body 2 so as not to protrude width-direction outward from the travel vehicle body 2 and possible to obtain the working vehicle 1 that is compact and slim.

In the working vehicle 1 of the present invention, each tank 7 has a tubular shape extending in the up-down direction.

When each tank 7 has such a tubular shape extending in the up-down direction, it is possible to house a large number of the tanks 7 so as to be placed collectively at an upper portion of the travel vehicle body 2, and it is possible without waste to house a large number of the tanks 7 at the upper portion of the travel vehicle body 2.

In the working vehicle 1 of the present invention, at least one tank 7 is provided at the rear portion of the travel vehicle body 2, and the fuel cell 8 may be provided at the front portion of the travel vehicle body 2.

When, as described above, at least one tank 7 that is heavy is provided at the rear portion of the travel vehicle body 2 and the fuel cell 8 is provided at the front portion of the travel vehicle body 2, it is possible with a greater weight applied to the rear in the front-rear direction to achieve weight balance in the front-rear direction.

In the working vehicle 1 of the present invention, at least one tank 7 is provided at the rear portion of the travel vehicle body 2 and the fuel cell 8 is provided at the front portion of the travel vehicle body 2, and a plurality of the tanks 7 may be provided to be arranged in the front-rear direction.

When, as described above, a plurality of the tanks 7 are provided to be arranged in the front-rear direction at the rear portion of the travel vehicle body 2, it is possible to provide a large number of the tanks 7 that are heavy at the rear portion of the travel vehicle body 2 and thus is possible to apply a greater weight to the rear in the front-rear direction.

In the working vehicle 1 of the present invention, at least one tank 7 is provided at the rear portion of the travel vehicle body 2 and the fuel cell 8 is provided at the front portion of the travel vehicle body 2, and a plurality of the tanks 7 may be provided to be arranged in the vehicle-body width direction.

When, as described above, a plurality of the tanks 7 are provided to be arranged in the vehicle-body width direction at the rear portion of the travel vehicle body 2, it is possible to provide a large number of the tanks 7 that are heavy at the rear portion of the travel vehicle body 2 and thus is possible to apply a greater weight to the rear in the front-rear direction.

In the working vehicle 1 of the present invention, at least one tank 7 is provided at the rear portion of the travel vehicle body 2 and the fuel cell 8 is provided at the front portion of the travel vehicle body 2, and the tank 7 may have a tubular shape extending in the up-down direction.

When, as described above, each tank 7 has a tubular shape extending in the up-down direction and is provided at the rear portion of the travel vehicle body 2, it is possible to provide a large number of the tanks 7 that are heavy so as to be placed collectively at the rear portion of the travel vehicle body 2 and thus is possible to apply a greater weight to the rear in the front-rear direction.

Example embodiments of the present invention provide the working vehicle 1 described in the following items.

(Item 1) A working vehicle 1 including a travel vehicle body 2 to travel in response to an external command and to attach the working device 49 thereto, a drive device 5 provided in or on the travel vehicle body 2 to generate a driving force for the travel vehicle body 2, at least one tank 7 to store a gas which is an energy source of the driving force, and a controller 70 to control travel of the travel vehicle body 2 autonomously or based on an external command, wherein the at least one tank 7 is at least partially located at a front portion or a rear portion of the travel vehicle body 2.

With the working vehicle 1 in the item 1, it is possible to position the tank(s) 7 that is/are heavy with appropriate weight balance in the front-rear direction when the working vehicle travels autonomously or based on an external command since at least a portion of the tank(s) 7 is provided at the front portion or the rear portion of the travel vehicle body 2.

(Item 2) The working vehicle 1 according to item 1, wherein the drive device 5 includes a fuel cell 8 (fuel cell stack) to generate electric power using a gas in the at least one tank 7, a battery 20 to store electric power generated by the fuel cell 8, and a drive motor 6 to be driven by electric power generated by the fuel cell 8.

With the working vehicle 1 in the item 2, it is possible to more clearly obtain the effect of positioning the tank 7 with appropriate weight balance in the front-rear direction since the tank(s) 7 tends to have the heaviest weight among members in a fuel cell vehicle that includes the fuel cell 8, the battery 20, and the drive motor 6.

(Item 3) The working vehicle 1 according to item 2, wherein one or more of the tanks 7 are provided at the front portion of the travel vehicle body 2, and the fuel cell 8 is provided at the rear portion of the travel vehicle body 2.

With the working vehicle 1 in the item 3, it is possible, by providing the heavy tank 7 at the front portion of the travel vehicle body 2, to achieve weight balance in the front-rear direction of the working vehicle 1 easily when, for example, the working device 49 is linked to the rear portion.

(Item 4) The working vehicle 1 according to item 2 or item 3, wherein a plurality of the tanks 7 are arranged in a front-rear direction.

With the working vehicle 1 in the item 4, it is possible to reduce the dimension of the travel vehicle body 2 in the vehicle-body width direction and possible to provide the working vehicle 1 that is appropriate for a small machine or the like that performs work in a narrow work place, because a plurality of the tanks 7 are provided to be arranged in the front-rear direction.

(Item 5) The working vehicle 1 according to any one of items 1 to 4, wherein each of the plurality of tanks 7 has a tubular shape extending in a vehicle-body width direction, and a dimension of each the plurality of tanks 7 in the vehicle-body width direction corresponds to a dimension of the travel vehicle body 2 in the vehicle-body width direction.

With the working vehicle 1 in the item 5, it is possible, without waste, to house a large number of the tanks 7 at an upper portion of the travel vehicle body 2, because each tank 7 has a tubular shape extending in the vehicle-body width direction and the dimension of the tank 7 in the vehicle-body width direction corresponds to the dimension of the travel vehicle body 2 in the vehicle-body width direction.

(Item 6) The working vehicle 1 according to item 2, wherein the at least one tank 7 has a tubular shape extending in a front-rear direction.

With the working vehicle 1 in the item 6, it is possible, without waste, to house each tank 7 at an upper portion of the travel vehicle body 2 such that the tank 7 does not protrude width-direction outward from the travel vehicle body 2, and possible to obtain the working vehicle 1 that is compact and slim, because each tank 7 has a tubular shape extending in the front-rear direction.

(Item 7) The working vehicle 1 according to item 6, wherein the at least one tank 7 is in the form of a single tube in which a dimension of the at least one tank 7 in a front-rear direction corresponds to a distance from the front portion to the rear portion of the travel vehicle body 2.

With the working vehicle 1 in the item 7, it is possible, without waste, to house the tank 7 at an upper portion of the travel vehicle body 2 such that the tank 7 does not protrude from the travel vehicle body 2 in the front-rear direction, and possible to house the tank 7 efficiently in the working vehicle 1, because the dimension of the tank 7 in the front-rear direction corresponds to the distance from the front portion to the rear portion of the travel vehicle body 2.

(Item 8) The working vehicle 1 according to item 5, wherein the plurality of tanks 7 are arranged in a front-rear direction.

With the working vehicle 1 in the item 8, it is possible, without waste, to house the tanks 7 at an upper portion of the travel vehicle body 2 such that the tanks 7 do not protrude outward in the width-direction from the travel vehicle body 2, and possible to obtain the working vehicle 1 that is compact and slim, because the plurality of tanks 7 are arranged in the front-rear direction.

(Item 9) The working vehicle 1 described the item 4, wherein each of the plurality of tanks 7 has a tubular shape extending in an up-down direction.

With the working vehicle 1 in the item 9, it is possible to house a large number of the tanks 7 so as to be placed collectively at an upper portion of the travel vehicle body 2, and it is possible, without waste, to house a large number of the tanks 7 at the upper portion of the travel vehicle body 2, because each tank 7 has a tubular shape extending in the up-down direction.

(Item 10) The working vehicle 1 according to item 2, wherein one or more of the tanks 7 are provided at the rear portion of the travel vehicle body 2, and the fuel cell 8 is provided at the front portion of the travel vehicle body 2.

With the working vehicle 1 in the item 10, since at least one tank 7 that is heavy is provided at the rear portion of the travel vehicle body 2, it is possible to provide the fuel cell 8 at the front portion of the travel vehicle body 2, and it is possible, with a greater weight applied to the rear in the front-rear direction, to achieve weight balance in the front-rear direction.

(Item 11) The working vehicle 1 according to item 10, wherein a plurality of the tanks 7 are arranged in a front-rear direction.

With the working vehicle 1 in the item 11, since the plurality of tanks 7 are arranged in the front-rear direction at the rear portion of the travel vehicle body 2, it is possible to provide a large number of the tanks 7 that are heavy at the rear portion of the travel vehicle body 2 and possible to apply a greater weight to the rear in the front-rear direction.

(Item 12) The working vehicle 1 according to item 10 or item 11, wherein the plurality of tanks 7 are arranged in the vehicle-body width direction.

With the working vehicle 1 in the item 12, since the plurality of tanks 7 are arranged in the vehicle-body width direction at the rear portion of the travel vehicle body 2, it is possible to provide a large number of the tanks 7 that are heavy at the rear portion of the travel vehicle body 2 and possible to apply a greater weight to the rear in the front-rear direction.

(Item 13) The working vehicle 1 according to items 10 to 12, wherein each of the plurality of tanks 7 has a tubular shape extending in an up-down direction.

With the working vehicle 1 in the item 13, when each tank 7 has a tubular shape extending in the up-down direction and is provided at the rear portion of the travel vehicle body 2, it is possible to provide a large number of the tanks 7 that are heavy so as to be placed collectively at the rear portion of the travel vehicle body 2 and possible to apply a greater weight to the rear in the front-rear direction.

While embodiments of the present invention have been described above, it is to be understood that the embodiments disclosed herein are considered as examples in all aspects and are not considered as limitations. The scope of the present invention is to be determined not by the foregoing description but by the claims, and is intended to include all variations and modifications within the scope of the claims and their equivalents.

### Reference Signs List

- 1: working vehicle
- 2: travel vehicle body
- 5: drive device
- 6: drive motor
- 7: tank
- 8: fuel cell stack (fuel cell)
- 20: battery
- 49: working device
- 70: controller

## Claims

1. A working vehicle comprising:
a travel vehicle body to travel in response to an external command and to attach a working device thereto;
a drive device provided in or on the travel vehicle body to generate a driving force for the travel vehicle body;
at least one tank to store a gas which is an energy source of the driving force; and
a controller to control travel of the travel vehicle body autonomously or based on an external command; wherein
the at least one tank is at least partially located at a front portion or a rear portion of the travel vehicle body.

2. The working vehicle according to claim 1, wherein
the drive device includes:
a fuel cell to generate electric power using a gas in the at least one tank;
a battery to store electric power generated by the fuel cell; and
a drive motor to be driven by electric power generated by the fuel cell.

3. The working vehicle according to claim 2, wherein
one or more of the tanks are provided at the front portion of the travel vehicle body; and
the fuel cell is provided at the rear portion of the travel vehicle body.

4. The working vehicle according to claim 2, wherein
a plurality of the tanks are arranged in a front-rear direction.

5. The working vehicle according to claim 4, wherein
each of the plurality of tanks has a tubular shape extending in a vehicle-body width direction; and
a dimension of each of the plurality of tanks in the vehicle-body width direction corresponds to a dimension of the travel vehicle body in the vehicle-body width direction.

6. The working vehicle according to claim 2, wherein
the at least one tank has a tubular shape extending in a front-rear direction.

7. The working vehicle according to claim 6, wherein
the at least one tank is in the form of a single tube in which a dimension of the at least one tank in a front-rear direction corresponds to a distance from the front portion to the rear portion of the travel vehicle body.

8. The working vehicle according to claim 5, wherein
the plurality of tanks are arranged in a front-rear direction.

9. The working vehicle according to claim 4, wherein
each of the plurality of tanks has a tubular shape extending in an up-down direction.

10. The working vehicle according to claim 2, wherein
one or more of the tanks are provided at the rear portion of the travel vehicle body; and
the fuel cell is provided at the front portion of the travel vehicle body.

11. The working vehicle according to claim 10, wherein
a plurality of the tanks are arranged in a front-rear direction.

12. The working vehicle according to claim 11, wherein
the plurality of tanks are arranged in a vehicle-body width direction.

13. The working vehicle according to claim 12, wherein
each of the plurality of tanks has a tubular shape extending in an up-down direction.
